# EUROPEAN PATENT SPECIFICATION

(11) **EP 3 334 801 B1**
(45) Date of publication and mention of the grant of the patent: **27.05.2020**
(21) Application number: 16739031.9
(22) Date of filing: 14.07.2016
(51) Int. Cl.: C09K 19/54, C09K 19/52, C09K 19/20, C09K 19/12, C09K 19/34, C09K 19/04, G02F 1/1333

(54) **MATERIAL COMBINATION**
MATERIALKOMBINATION
COMBINAISON DE MATÉRIAUX

(30) Priority: 11.08.2015 EP 15002386
(43) Date of publication of application: 20.06.2018
(73) Proprietor: Merck Patent GmbH, 64293 Darmstadt (DE)
(72) Inventor: TUFFIN, Rachel, Chandler's Ford SO53 4SY (GB); PAARI, Owain Llyr, Ringwood BH24 3AN (GB); BAKER, Philip, Whitwick Leics LE67 5AY (GB); BROWN, Carl, Stapleford NG9 8PZ (GB); SAGE, Ian Charles, Malvern WR14 3NT (GB)
(86) International application number: PCT/EP2016/001226
(87) International publication number: WO 2017/025167

(56) References cited:
- WO-A1-2006/046185
- WO-A1-2012/163470
- WO-A2-2005/088610
- US-A- 5 539 556
- SEYRAT EMILIE ET AL: "Amorphous fluoropolymers as insulators for reversible low-voltage electrowetting", JOURNAL OF APPLIED PHYSICS, AMERICAN INSTITUTE OF PHYSICS, US, vol. 90, no. 3, 1 August 2001 (2001-08-01) , pages 1383-1386, XP012053916, ISSN: 0021-8979, DOI: 10.1063/1.1383583 cited in the application

## Description

### Field of the Invention

This invention provides a material combination consisting of a biphasic system comprising a liquid crystal material in combination with a second immiscible fluid, optical elements containing said material combination, able to be transformed into components useful in various optical applications including lenses where the focal length can be controlled using an electric field. Furthermore, the invention relates to the use of such lenses for display devices operable in a 2D mode or a 3D mode, optical shutters, beamsteerers, diffraction gratings, or electronic paper displays.

### Background of the Invention

Adaptive optical components such as *e.g.* variable focus lenses are commonly used in optical systems. Here, the focal length is adjusted by mechanical actuation of lens sets using motors or piezoelectric actuators. Mechanical tuning suffers from higher power consumption and miniaturization difficulties when it is used for portable applications that require small dimensions. To overcome the problems associated with mechanical focus systems alternative variable lenses were developed such as gradient-index-changed lenses [cf. T. Nose, S. Masuda and S. Sato, "A liquid crystal microlens with hole-patterned electrodes on both substrates," Jpn. J. Appl. Phys. 31, 1643 (1992); Y. Choi, J.-H.Park, J.-H Kim. and S.-D.Lee, "Fabrication of a focal length variable microlens array based on a nematic liquid crystal," Optical Mater. 21, 643 (2003); H Ren, Y H Fan and S T Wu, "Liquid-crystal microlens arrays using patterned polymer networks," Opt. Lett. 29, 1608 (2004)]. The gradient-index-changed lens adjusts its focal length by electrically redistributing individual liquid crystal molecules within the lens where the liquid crystal molecules are sealed in between two Indium Tin Oxide (ITO) glasses.

Tunable optofluidic devices, as opposed to solid state photonic devices, are based on optical interfaces made of liquids. Because of the properties of the liquid phase, devices based on this technology have the advantage of *e.g.* fast adaptable optical output and robustness and many technical applications of this technology have been developed such as adaptive-focus lenses, beam steerers, gratings, irises, optical switches and displays. An example are shape-changed lenses [e.g. B. Berge and J. Peseux, "Variable focal lens controlled by an external voltage: An application of electrowetting," Eur. Phys. J. E 3, 159 (2000); S. Kwon and L. P. Lee, "Focal length control by microfabricated planar electrodes-based liquid lens (µPELL)," Transducers Eurosensors, Germany, 10-14 June, (2001); N. Chronis, G. L. Liu, K-H Jeong and L. P. Lee, "Tunable liquid-filled microlens array integrated with microfluidic network," Opt. Express 11, 2370 (2003); M. Agarwal, R. A. Gunasekaran, P. Coane and K. Varahramyan, "Polymer-based variable focal length microlens system," J. Micromech. Microeng. 14, 1665 (2004)].

In order to be able to manipulate the optical interface, various techniques have been applied, e.g. electrowetting or dielectrophoresis.

The shape-changed lens, also known as liquid lens, adjusts its focal length by electrically transforming the surface profile of a liquid droplet. The surface profile that depends on the contact angle of the droplet can be changed by the electrowetting effect. Salt is commonly added to water in order to increase water conductivity for the electrowetting mechanism and to widen operation temperature of water. Electrolysis, Joule heating, microbubbles and evaporation were also found to hinder optical performance and operation conditions of the water-based liquid lens. [F. Mugele and J-C Baret, "Electrowetting: from basics to applications," J. Phys.: Condens. Matter 17, R705 (2005)]. The electrolysis of the salty water could be minimized based on the "electrowetting on dielectric technique" that places an insulating layer on the electrodes. The insulating layer reduces the Joule heating effect and the microbubbles; however, it leads to higher operation voltages [E. Seyrat and R. A. Hayes, "Amorphous fluoropolymers as insulators for reversible low-voltage electrowetting", J. Appl. Phys. 90, 1383 (2001)]. Further, high saturated vapor pressure of the salty water (i.e. 5 torr) requires expensive hermetic packaging (i.e. typically metal-glass package) to seal the water inside the lens for long term operation. The use of the electrowetting effect to form a microlens array using water has been described in e.g. "High speed adaptive liquid microlens array", C. U. Murade, D. van der Ende, and F. Mugele; Optics Express, Vol. 20, No. 16, 18180, (2012).

G. McHale, C.V. Brown, M. I. Newton, G. G. Wells, and N. Sampara; Phys. Rev. Lett. 107, 186101 (2011) described that liquid dielectrophoresis induced by non-uniform electric fields can be used to enhance and control the wetting of dielectric liquids on substrates containing in-plane electrodes. This enables the modification of size and shape of the surface of a liquid without the above mentioned disadvantages of electrowetting. The term dielectrowetting is utilized when the underlying wetting effect is driven by dielectrophoresis. This can occur when non-uniform electric fields and electrically insulating fluids are used.

A particular class of materials that have been demonstrated to be suitable for dielectrophoresis is nematic liquid crystals. Liquid crystals can be considered as insulating dielectric fluids when the molecules have non-zero dielectric anisotropy. C.-C. Cheng, C.A. Chang and J. A. Yeh, Opt. Exp. 14(9), 4101 (2006), describe the use of liquid crystals to make active lenses that exploit the dielectrophoresis effect by altering the shape of a droplet of a LC mixture on a substrate containing a concentric ITO electrode pattern. However, the commercially available materials used here have permittivities comparable to common solvents.

The spreading of liquids using this dielectrowetting effect has also been described in *e.g.* C.V. Brown, G.G. Wells, M.I. Newton and G. McHale, Nature Photonics 3(7), 403 (2009). This paper further describes the case where thin films can be induced to wrinkle (when further dielectrowetting is not possible). This effect is known as "forced wrinkling" and the peak of the wrinkle is between the electrodes and the trough is coincident with the electrode.

Similar approaches of making active lenses have been disclosed in *e.g.* WO 2006/046185 and US 7,483,218. However in both cases, the effect is based on electrophoresis rather than dielectrophoresis.

In C.V. Brown, G.G. Wells, M.I. Newton and G. McHale, Nature Photonics 3(7) 403 (2009), forced wrinkling was applied to an oil air interface to give cylindrical lenses. Such liquid based devices are restricted in their orientation of operation by gravity. However, it is possible that the surface wrinkle could be produced at the interface between two immiscible liquids, e.g. oil-water, in an encapsulated device, as described in GB 2422680. This type of approach is used in the Varioptic variable focus liquid lens to produce devices which can be used in any orientation and which are robust to shock and mechanical vibrations [Berge, B. & Peseux, J. Variable focal lens controlled by an external voltage: An application of electrowetting. Eur. Phys. J. E3, 159-163 (2000)].

The disadvantage of this approach is that there is a smaller difference between the refractive indices of oil and water relative to the large difference between the refractive indices of oil and air. Therefore, to produce the maximum diffraction efficiency (e.g. to reach the minimum in the transmission of the zero order undeviated beam) the wrinkle amplitude at the interface between two fluids would need to be several times larger than the amplitude that would be required at the oil-air interface. To compensate for the loss of difference in refractive index by replacing air with a fluid medium, new material combinations are required being susceptible to low operating voltage and at the same time having high dielectric constant, low surface tension, low viscosity, suitable refractive indices and also good thermal and chemical stability especially when exposed to irradiation, in order to enable robust devices with good optical performance and high mechanical stability.

From US 5,539,556 it is known to realise light modulating layers by using a material combination consisting of a nematic liquid crystal and a second transparent liquid material that is immiscible with the liquid crystal and that is dispersed in the liquid crystalline phase in form of droplets. The transparent liquid material can be a silicone oil.

Liquid crystal mixtures with high permittivity are known to the person skilled in the art for liquid crystal displays utilising polymer stabilised blue phase liquid crystals. In WO 2012/163470 and WO 2013/156113 such blue phase liquid crystal mixtures are disclose comprising a basic host material with high permittivity to be used in combination with a chiral dopant with high helical twisting power, necessary to achieve the blue phase, and polymerisable compounds to stabilise the blue phase. For the basic host material itself without additives, no application is described so far.

Perfluorinated hydrocarbons, (poly)ethers and amines are known to be immiscible with common organic chemicals and various applications are described, such as fluorous phase chemistry in chemical synthesis using perfluorinated hydrocarbons (I.T.Horvat (Ed.), Topics Curr. Chem. Vol. 308,Springer Verlag Berlin, Heidelberg, 2012), for medical purposes, e.g. burn treatment (WO 81/00002) or synthetic blood (US 405,798). Further, e.g. fluorosilicone oils are used for example as antifoam (US 5,454,979) and fluorinated polyethers are an important class of lubricating oils (e.g. EP 1 681 339 A2).

Surprisingly it was found that a liquid crystal medium with high permittivity in combination with a second perfluorinated fluid that is immiscible with said liquid crystal medium is suitable to meet the above mentioned requirements for the production of optical components for the use as adaptable lenses. Such LC-medium exhibits a high permittivity, low viscosity, a good thermal and light stability. Suitable second media exhibit low viscosities, low miscibility with the LC-media and sufficiently different refractive indices from said LC-media.

### Summary of the invention

The present invention relates to a material combination containing
a first fluid (40) comprising a liquid crystal material and, an electrically insulating second fluid (41) substantially not miscible with the first fluid, comprising one or more substantially fluorinated or perfluorinated organic compounds which are in contact with each other along a phase boundary.

The present invention further relates to an optical component for generating spatially varying interfacial refraction of waves of light by means of dielectrophoresis, comprising:
a fluid enclosure comprising
a first substrate (10),
a second substrate (11) placed opposite the first substrate each defining an optical input or output face, the optical axis of the device extending from the first substrate to the second substrate and the fluid enclosure including
   a material combination according to the present invention, with the first fluid and the second fluid being in contact along an interface, and
first and second interdigitated electrodes (20, 21) disposed on the first substrate and operable to alter the shape of the interface in dependence of a voltage applied between the electrodes, wherein the first fluid and the second fluid have different indices of refraction, so that the interface represents a refractive surface, and the electrooptical effect being associated with a periodic undulation at the interface between the first fluid and the second fluid upon application of a voltage between the electrodes.

### Brief Description of the Drawings

Figure 1 is a cross sectional side view of an electrooptical element according to a preferred embodiment of the present invention.
Figure 2 is a cross sectional side view of an electrooptical element according to a preferred embodiment of the present invention upon application of a voltage.
Figure 3 shows the voltage dependence of the wrinkle amplitudes of a lens element according to a preferred embodiment of the present invention..
Figure 4 shows the variation of the focal length with the applied voltage in a lens element with a first fluid exposed to air.
Figure 5 shows the variation of the focal length with the applied voltage in a lens element of a biphasic system comprising a first and a second fluid according to a preferred embodiment of the present invention.

### Detailed Description of the Invention

As used herein, "fluid" refers to a continuous, amorphous substance whose molecules move freely past one another. A fluid may be a gas, liquefied gas, liquid or liquid under pressure or flowable particulate matter. As used herein, "fluid enclosure" may refer to a device for physically storing a fluid.

In a preferred embodiment, the second fluid comprises one or more substantially fluorinated or perfluorinated compounds. Preferably, the second fluid entirely consists of substantially fluorinated or perfluorinated compounds, particularly preferably it consists entirely of perfluorinated compounds.

Perfluorinated means that substantially all the hydrogen atoms of the carbon materials have been replaced by fluorine atoms. While the perfluorinated materials are preferred, carbon materials which are substantially fluorinated can also be used in this invention. "Substantially fluorinated" indicates that most of the hydrogen atoms have been replaced by fluorine atoms, and that further replacement does not substantially decrease the miscibility with non-fluorinated materials or partially fluorinated materials. It is believed that this level is reached when about 50% of the hydrogen atoms have been replaced by fluorine atoms. Also certain of the fluorine atoms of foregoing materials may be substituted by other halogen atoms such as chlorine.

As indicated, perfluorinated means that substantially all the hydrogen atoms of the carbon material have been replaced by fluoride atoms. It is conceivable in the manufacture of such compounds that minor amounts of substantially fluorinated derivatives may be mixed with completely fluorinated compounds. This is permissible provided that the lack of complete replacement of all hydrogens does not affect the essential characteristics of the liquid perfluorocarbons of this invention. It is preferred that at least 95% of the hydrogen atoms have- been replaced, more preferably at least 98% and even more preferably 100%.

Among the perfluorocarbon compounds that may be employed are perfluorodecalin (PP5), perfluoro-1-methyldecaline, perfluoro-n-undecane, perfluorododecane, perfluoro-n-octylcyclohexane, perfluoro-p-diisopropylcyclohexane, perfluoroisopropylcyclohexane, perfluoro-n-butylcyclohexane perfluoro-m-diisopropylcyclohexane, perfluoro-1,2-dimethylcyclohexane, perfluorotrimethylcyclohexane, perfluorotetramethylcyclohexane, perfluoro-1-methyl-4-isopropylcyclohexane, perfluoro-1-methyl-4-t- butylcyclohexane, perfluoropentadecane, perfluoro(methylcyclopentane), perfluorohexane, perfluoroheptane, perfluorokerosene, perfluorotetradecahydrophenanthrene, perfluorododecahydrofluorene, perfluorobicyclo[4.3.0]nonane, perfluoro-*endo-*tetrahydrodicyclopentadiene, perfluoroadamantane, perfluoro-ethyladamantane, perfluoro-methyladamantane, perfluoro-ethylmethyladamantane, perfluoro-ethyldimethyladamantane, perfluoro-triethyladamantane, perfluoro-trimethyldiadamantane, perfluoro-methyldiadamantane, perfluoro-1,3,5,7-tetramethyladamantane, perfluoro-1,3-dimethyladamantane, perfluoro-tetrahydrodicyclopentadiene, perfluoro-methylbicyclo[2.2.2]octane, perfluoro-dimethylbicyclo[2.2.2]octane, perfluoro-pinane, perfluoro-camphane, perfluoro-1,4,6,9-dimethanodecaline, perfluoro-bicyclo[4.3.2]undecane, perfluoro-bicyclo[5.3.0]decane, perfluoro-*exo*-tetrahydrodicyclopentadiene, perfluorobicyclo[5.3.0]decane, perfluorodimethylbicyclo[3.3.1.]nonane, perfluoro-2,6-dimethylbicyclo[3.3.1]nonane, perfluoro-3-methylbicyclo[3.3.1]nonane, perfluorodecahydroacenaphthene, perfluorotrimethyl-bicyclo[3.3.1.]nonane, perfluoro-7-methyl bicyclo[4.3.0.]nonane, perfluor-n-octylbromid, perfluorotributylamine (FC47), perfluoro-N,N-dialkylcyclohexylamine, perfluoroalkylmorpholine, perfluoroalkylpiperidine, perfluorotetrahydrofuran (FC80), perfluoro-2-butyltetrahydrofuran, perfluoroether (PID) [(CF₃)₂CFOCF₂(CF₂)₂CF₂OCF(CF₃)₂], perfluoroether (PIID) [(CF₃)₂CFOCF₂(CF₂)₆CF₂OCF(CF₃)₂], perfluoropolymer (E3) [CF₃CHF(OCF₂C(CF₃)F)₂OCF₂CF₂CF₃], perfluoropolymer (E4) [CF₃CHF(OCF₂C(CF₃)F)₃OCF₂CF₂CF₃], perfluoroetherpolymer (Fomblin Y), fluorosilicone oil 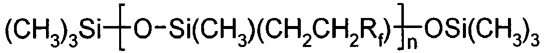 where Rf is CₙF₂ₙ₊₁, n being an integer from 1 to 4, p is an integer such that the average viscosity at room temperature ranges from 50 to 10000cS, preferably from 50 to 100, marketed by Dow Corning as FS® 1265 when R_{f} is CF₃.

The perfluorocarbons and any derivatives thereof may be generally termed as "liquids". The term "liquids", as used herein, is a comprehensive designation incorporating compounds that are in a state neither solid nor gaseous such as liquids, emulsions and gels. The term "perfluorocarbon" means a "cyclic" or "acyclic" compound of carbon. Whereas the term "substituted derivatives thereof" characterizes substituted perfluorocarbons with chemical elements within their structures such as oxygen, nitrogen, chlorine and bromine

It is to be understood that perfluorocarbon liquids of this invention may be formed of "neat" perfluorocarbon liquids, emulsions, suspensions or solutions of perfluorocarbons in mixture with themselves or other solvents. While some of the foregoing compounds are solid at ambient temperature they are soluble in ones which are liquid at ambient temperature and such a mixture could be used. For instance, perfluoro-1,3-dimethyl adamantane is normally a solid but in mixture with perfluorotrimethyl-bicyclo[3.3.1.]nonane a liquid is formed, *i.e.,* DAWN.

The useful substantially fluorinated or perfluorinated materials are those which are generally liquids at temperatures and pressures, including ambient temperatures and pressures. Perfluorinated C8 or lower materials and up to C18 or higher materials can be used in this invention. Mixtures of various different perfluorinated materials can also be used.

The above perfluorocarbons can be synthesized by well known chemical or electrochemical processes. The preferred perfluorinated materials are either commercially available or can be prepared following methods described in the following U.S. patents: 4,105,798; 3,911,138 and 3,962,439 or Houben-Weyl, Methods in Organic Chemistry, Volume E10 - Organo-Fluorine Compounds, Volumes 1-5 (4th Edition).

In a preferred embodiment of the present invention the first fluid comprises a liquid crystal medium comprising one or more mesogenic compounds of formula I, 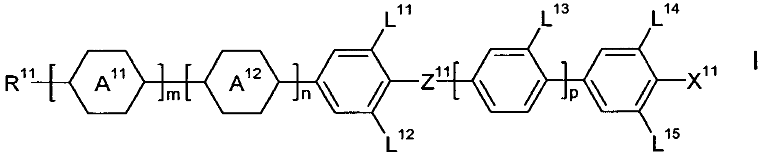 wherein
- L¹¹ to L¹⁵: are independently of each other H or F,
- R¹¹: is alkyl, which is straight chain or branched, is unsubstituted, mono- or poly-substituted by F, Cl or CN, and in which one or more CH₂ groups are optionally replaced, in each case independently from one another, by -O-, -S-, -NR⁰¹-, -SiR⁰¹R⁰²-, -CO-, -CO-O-, -O-CO-, -O-CO-O-, -S-CO-, -CO-S-, -CY⁰¹=CY⁰²- or -C≡C- in such a manner that O and/or S atoms are not linked directly to one another,
- Y⁰¹ and Y⁰²: are, independently of each other, F, Cl, or CN, and alternatively one of them may be H,
- R⁰¹ and R⁰²: are, independently of each other, H, or alkyl with 1 to 12 C-atoms,
- Z¹¹: is -CO-O-, O-CO-, -OCF₂-, or -CF₂O-,
- X¹¹: denotes halogen, CN, SF₅, a mono- or polyhalogenated alkyl-, or alkoxy having 1 to 6 C-atoms or a mono-, di- or polyhalogenated alkenyl having 2 to 6 C-atoms, 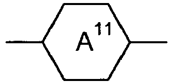 denotes a diradical group selected from the following groups:
a) the group consisting of trans-1,4-cyclohexylene, 1,4-cyclohexenylene and 1,4'-bicyclohexandiyl, in which, in addition, one or more non-adjacent CH₂ groups may be replaced by -O- and/or -S- and in which, in addition, one or more H atoms may be replaced by F,
b) the group consisting of 1,4-phenylene and 1,3-phenylene, in which, in addition, one or two CH groups may be replaced by N and in which, in addition, one or more H atoms may be replaced by F, and 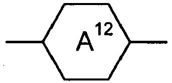 denotes a diradical group selected from the group consisting of 1,4-phenylene and 1,3-phenylene, in which, in addition, one or two CH groups may be replaced by N and in which, in addition, one or more H atoms may be replaced by F,
- m: is 0 or 1,
- n: is 0, 1 or 2,
- p: is 0 or 1 and
- m+n+p: is 0,1 or 2.

In a preferred embodiment of the present invention the LC medium comprises one more compounds of formula I-1, 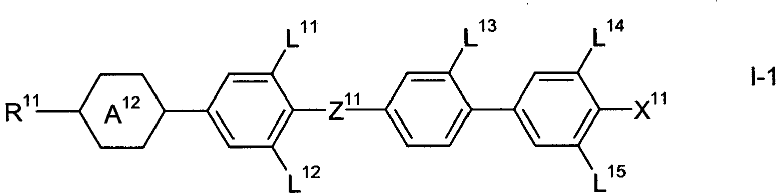 wherein
A¹², L¹¹ to L¹⁵, R¹¹ X¹¹ and and Z¹¹ have one of the meanings as indicated above in formula I.

Compounds I-1 are preferably selected from the group of compounds of its sub-formulae 1-1-1 and I-1-2, preferably of formula I-1-2, 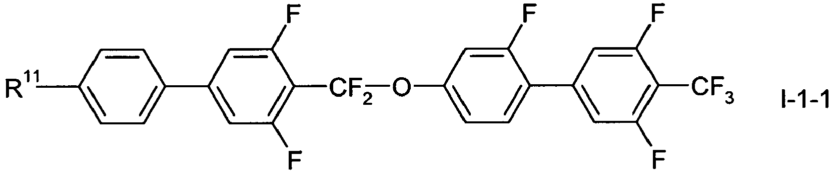 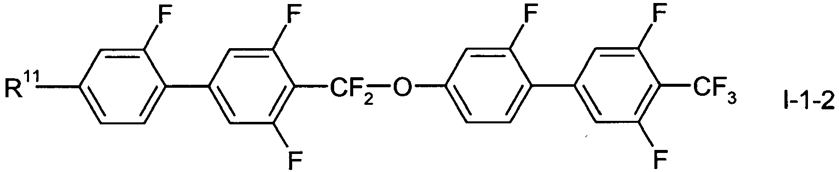 wherein R¹¹ has the meaning given under formula I above and preferably is *n*-alkyl, most preferably ethyl, *n*-propyl, *n*-butyl, *n*-pentyl, or *n*-hexyl.

In a preferred embodiment of the present invention, the LC medium comprises one or more compounds of formula I-2 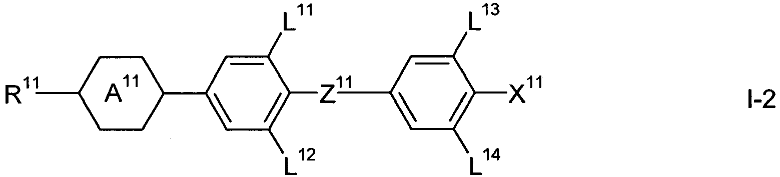 wherein
A¹¹, L¹¹ to L¹⁴, R¹¹, X¹¹ and Z¹¹ have the meaning as indicated above in formula I.

In a preferred embodiment of the present invention, the LC medium comprises one more compounds of formula I-2 selected from the group of compounds of formulae I-2-1 to I-2-5 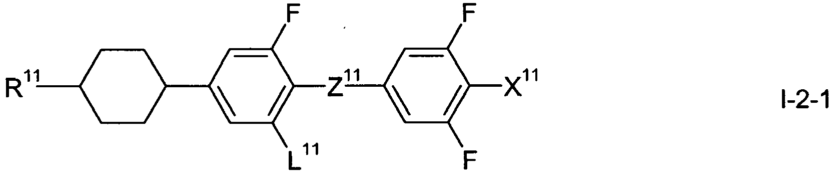 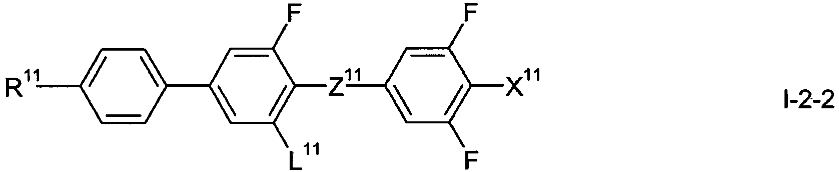 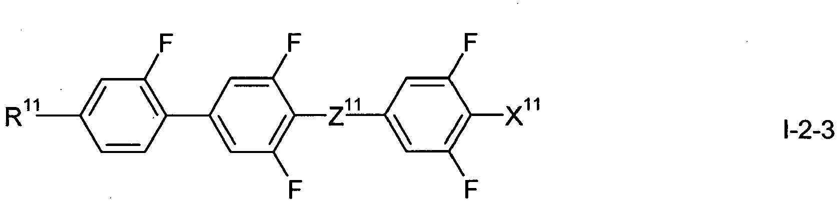 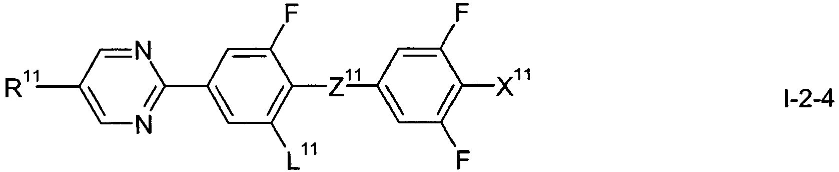 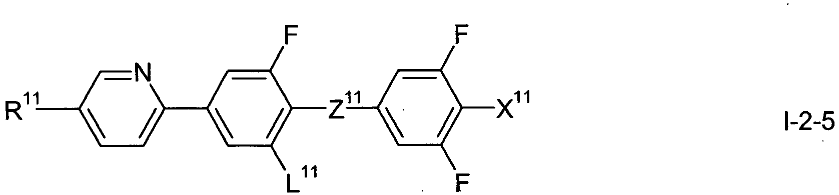 wherein the parameters have one of the meanings as indicated under formula I.

In a preferred embodiment of the present invention the compounds of formula 1-2-1 to 1-2-5 are preferably selected from the group of compounds of the sub-formulae I-2-1 a to I-2-1 c, 1-2-2a to 1-2-2f, I-2-3a to 1-2-3c, I-2-4a to 1-2-4f and I-2-5a to 1-2-5f, more preferably from the group of compounds of formula I-2-2c, I-2-3c or I-2-2f, 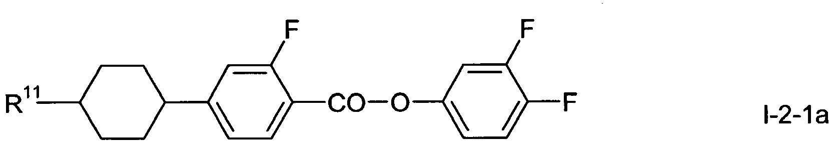 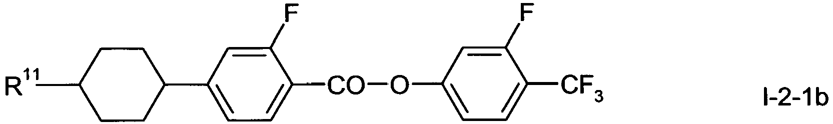 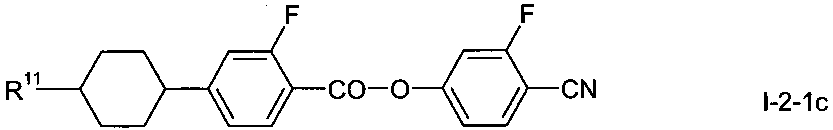 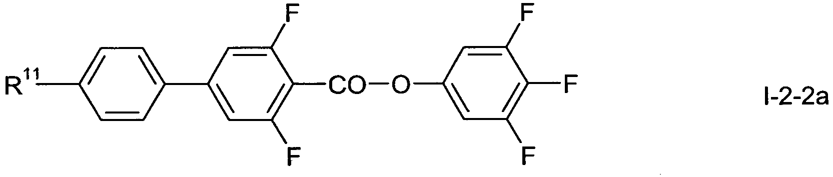 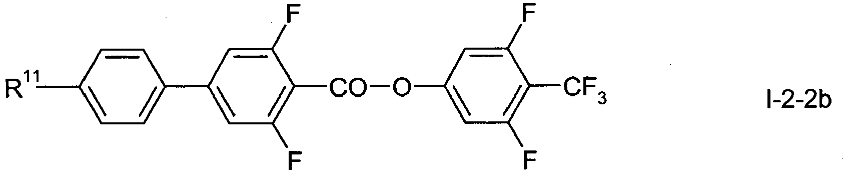 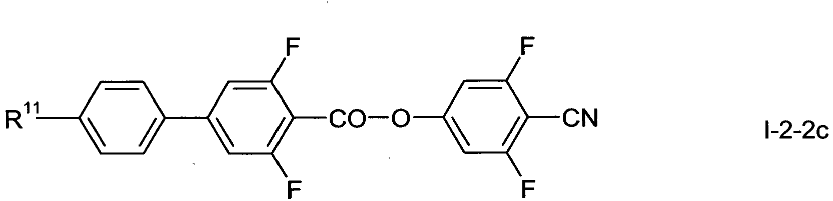 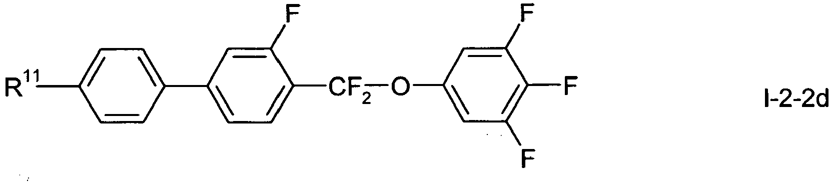 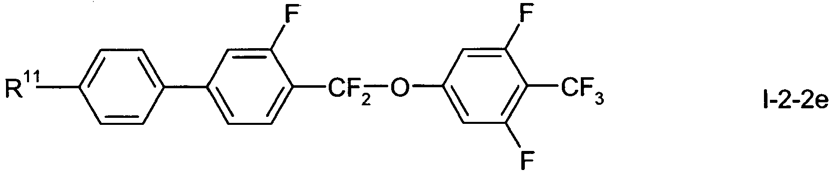 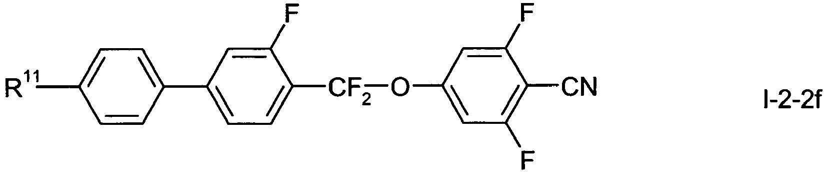 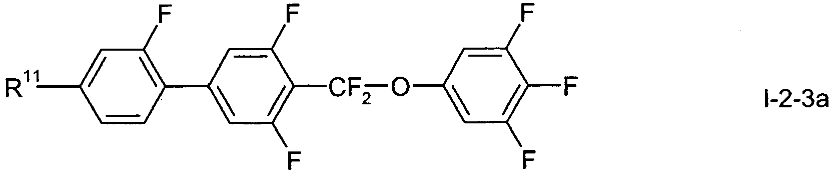 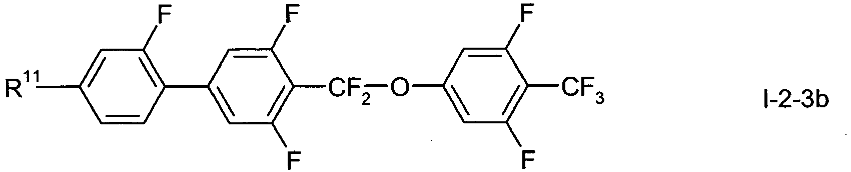 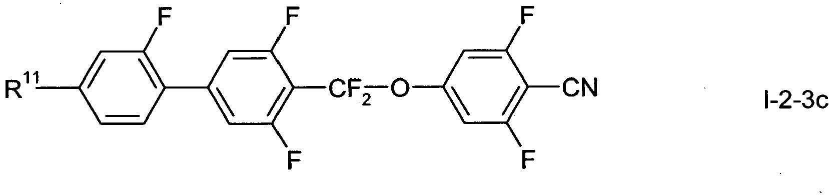 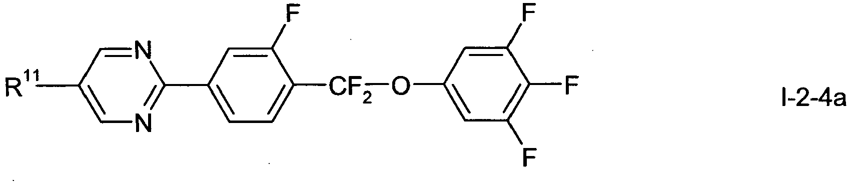 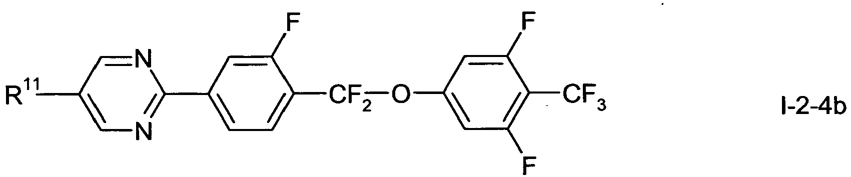 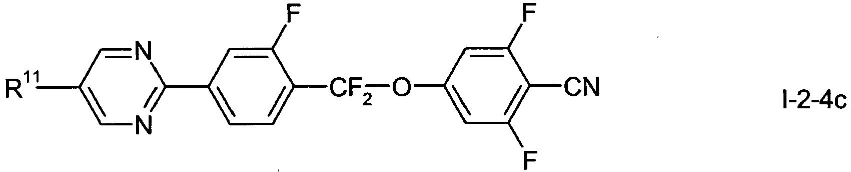 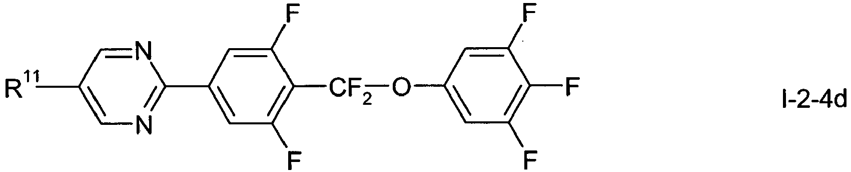 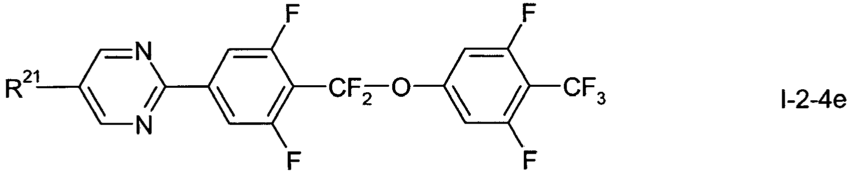 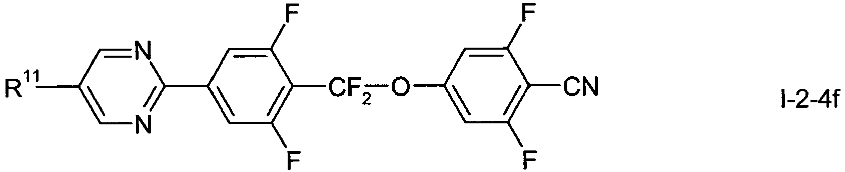 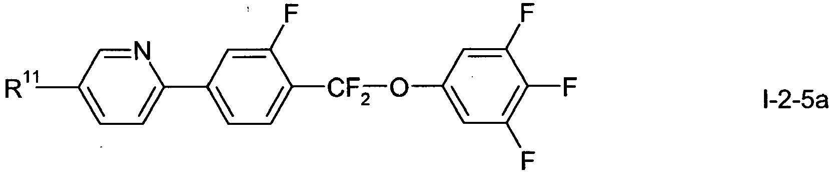 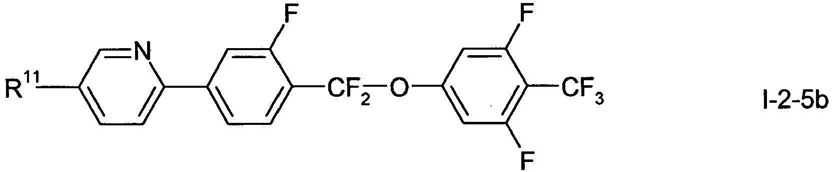 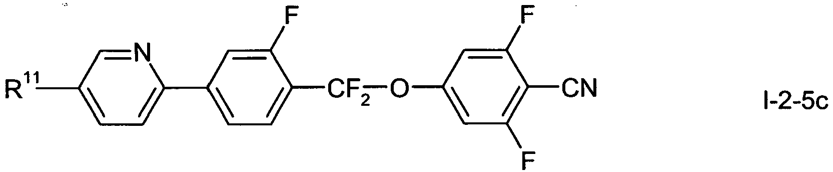 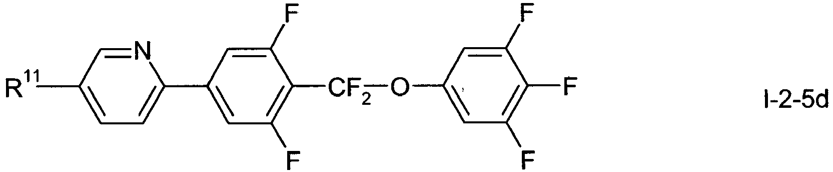 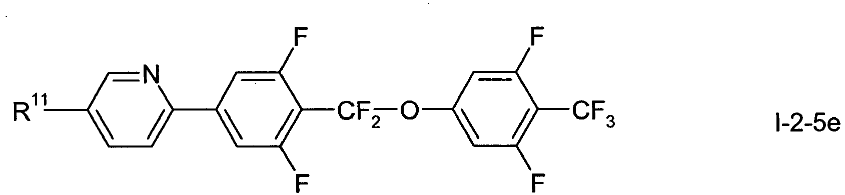 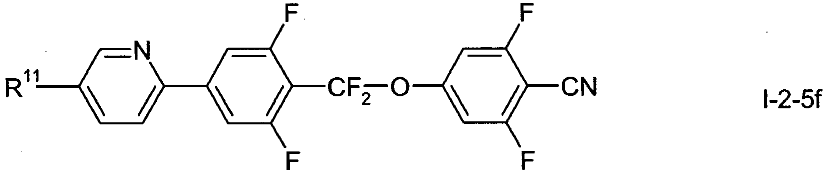 wherein R¹¹ has one of the meanings as indicated above in formula II and preferably is *n*-alkyl, most preferably ethyl, *n*-propyl, *n*-butyl, *n*-pentyl or *n-*hexyl.

In a preferred embodiment of the present invention, the LC medium comprises one or more compounds of formula I-3, 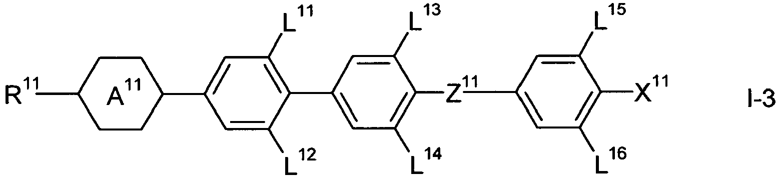 wherein A¹¹, L¹¹ to L¹⁶, R¹¹, X¹¹ and Z¹¹ have the meanings as defined in formula I above.

The compounds of formula I-3 are preferably selected from 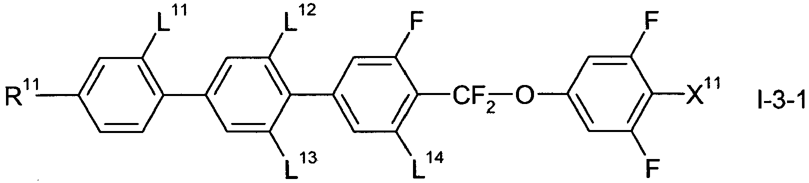 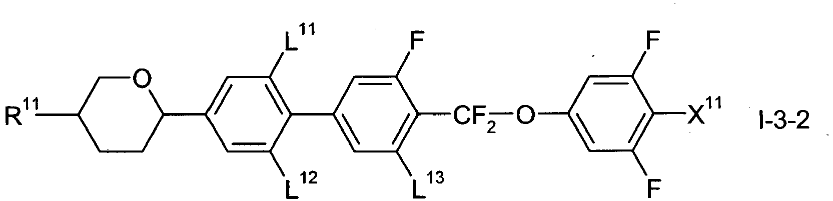 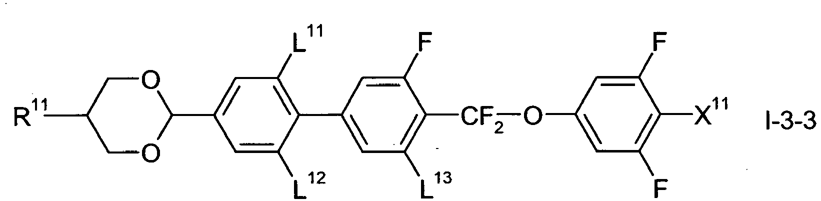 wherein L¹¹ to L¹⁴, R¹¹ and X¹¹ have one of the meanings indicated in formula I above.

In a further preferred embodiment of the present invention the compounds of formulae 1-3-1, I-3-2 and I-3-3 are selected from the sub-formulae I-3-1a to I-3-1f, I-3-2a to I-3-2c and I-3-3a to I-3-3f

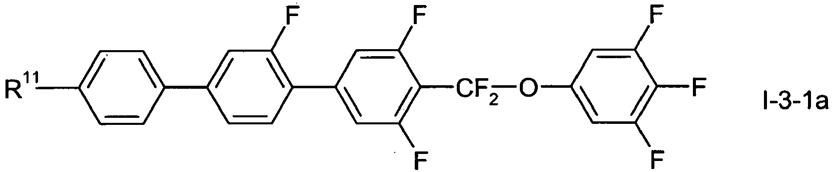

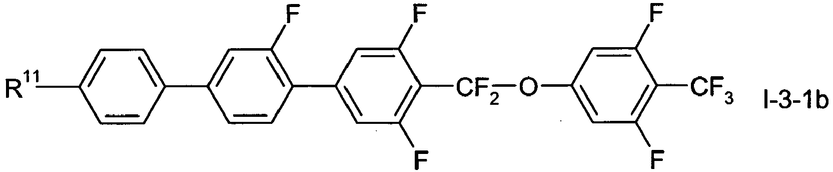

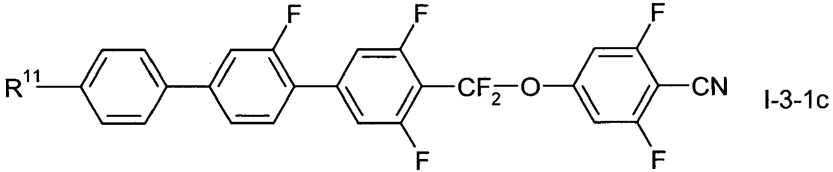

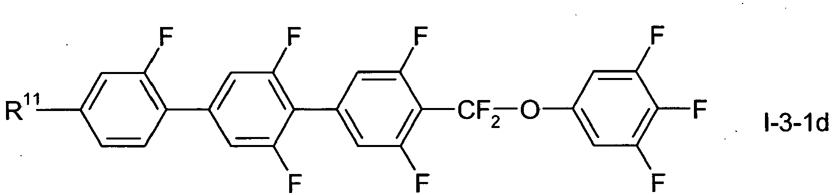

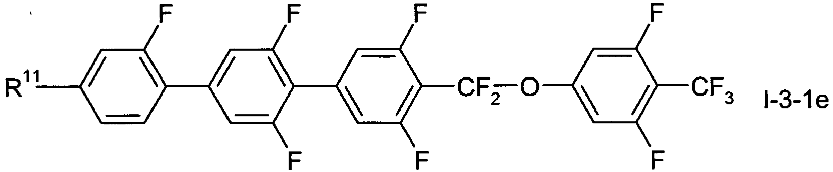

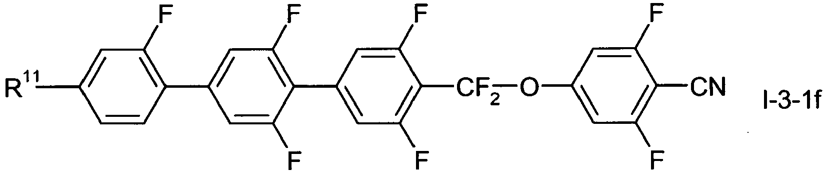

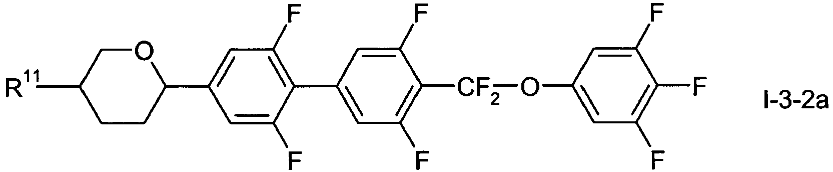

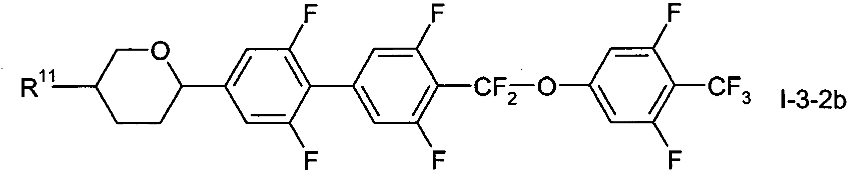

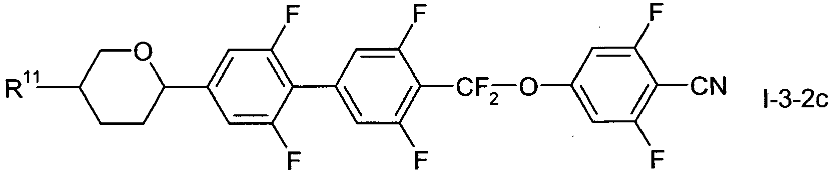

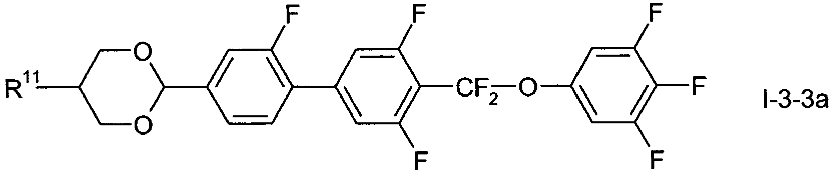

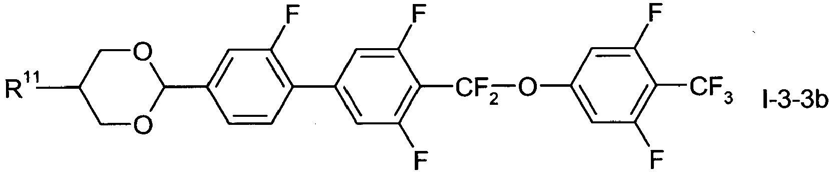

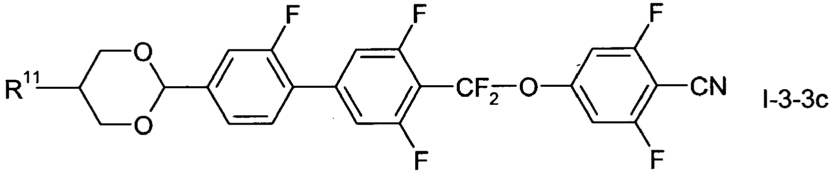

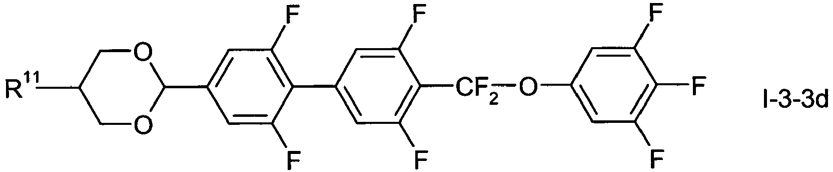

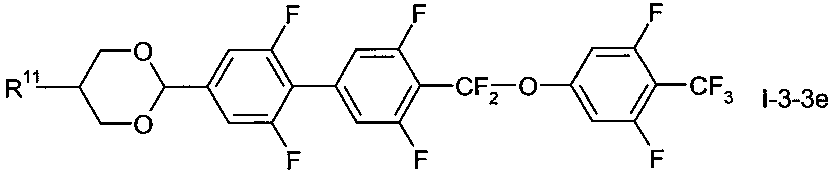

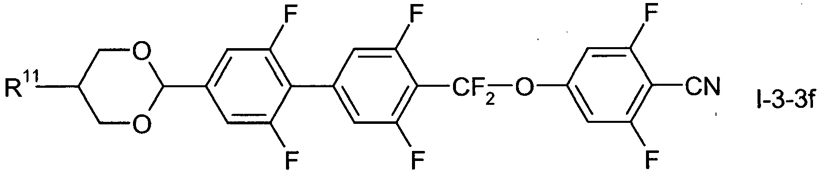

In a preferred embodiment of the present invention, the LC medium comprises one or more compounds of formula I-4, 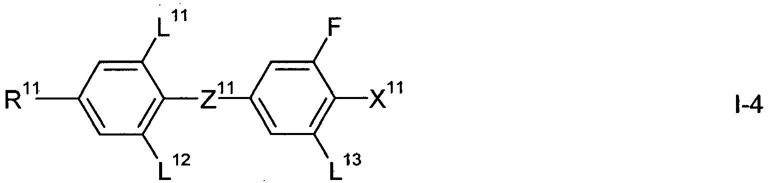 wherein
L¹¹ to L¹³, R¹¹, X¹¹ and and Z¹¹ have one of the meanings as indicated above in formula I.

In a further preferred embodiment the compounds of formula I-4 are preferably selected from compounds of formulae 1-4-1 or I-4-2 or a combination thereof. 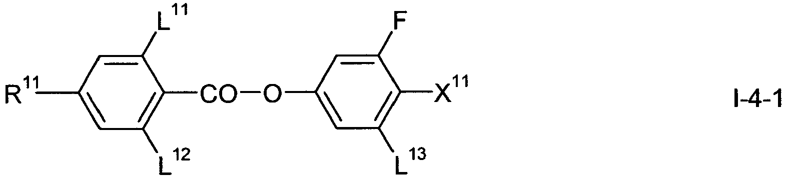 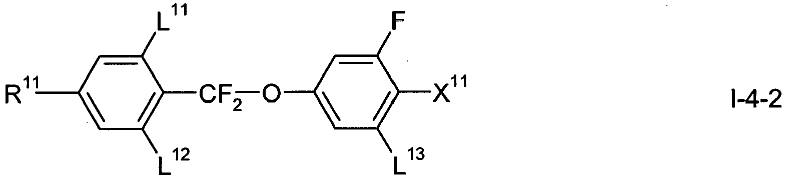 wherein the parameters R¹¹, L¹¹ to L¹³ and X¹¹ have one of corresponding meanings given above in formula I.

Compounds of formula 1-4-1 and 1-4-2 are preferably selected from the group of compounds of the following sub-formulae 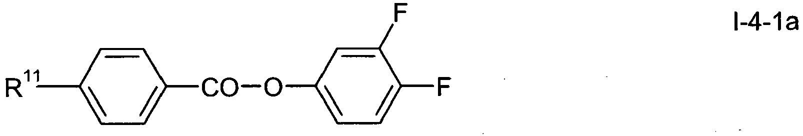 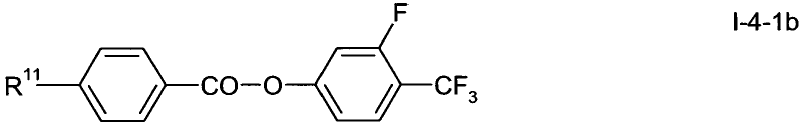 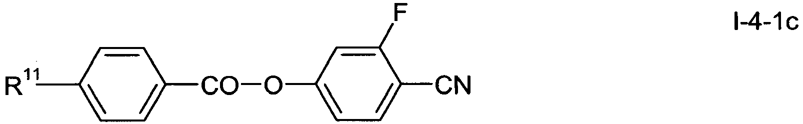 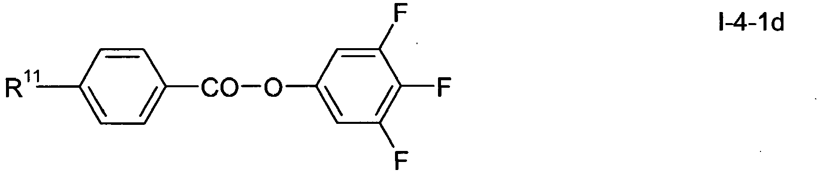 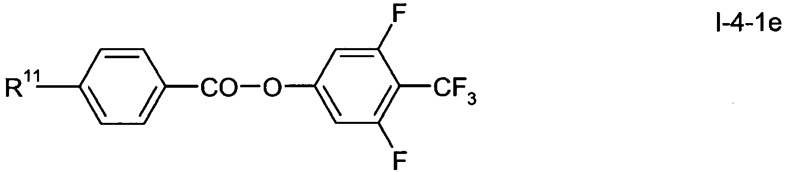 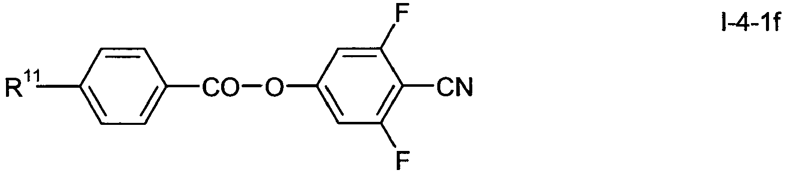 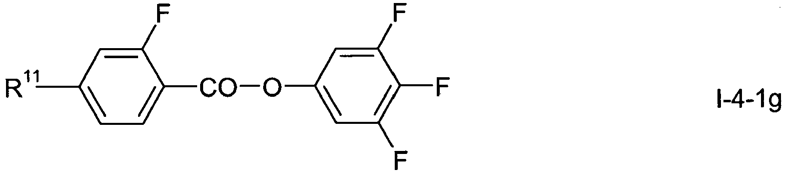 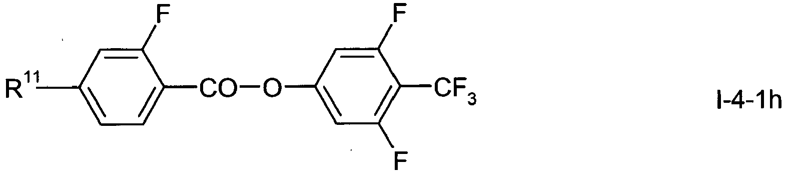 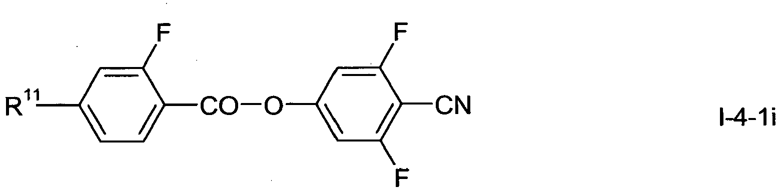 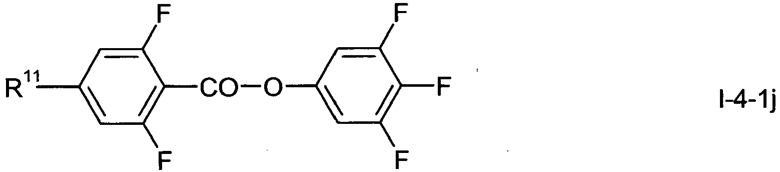 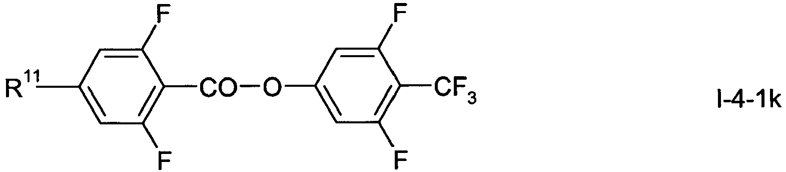 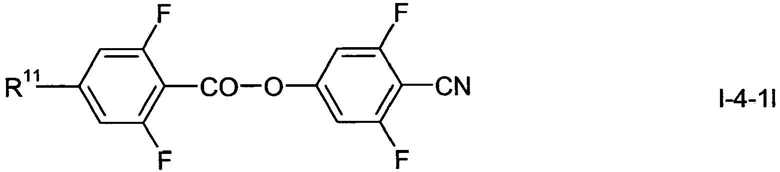 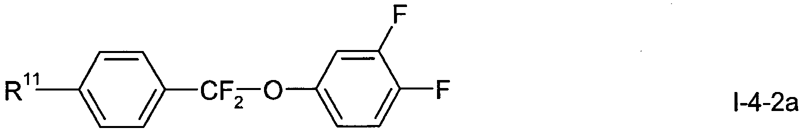 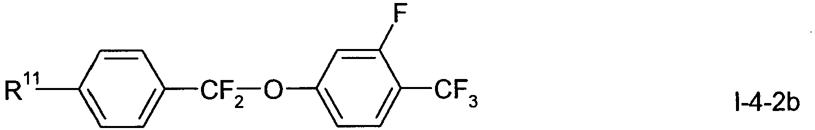 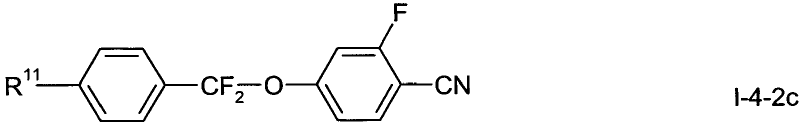 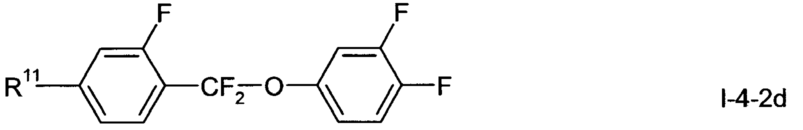 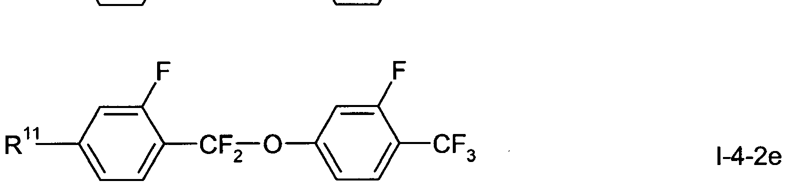 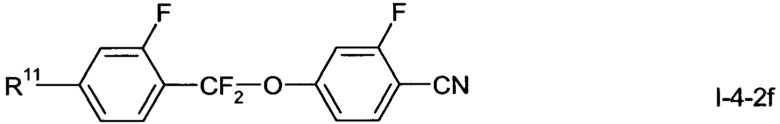 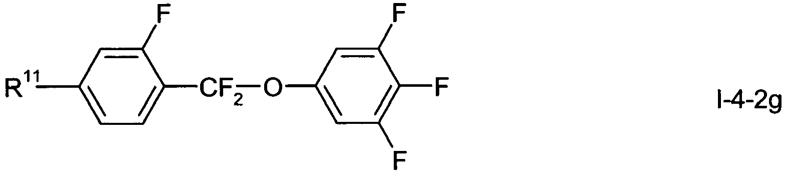 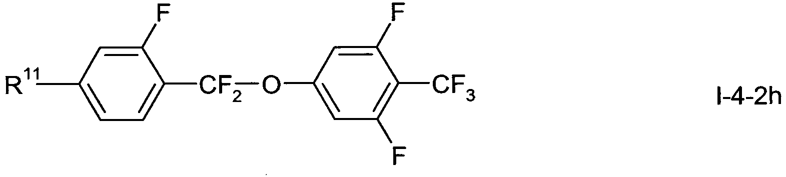 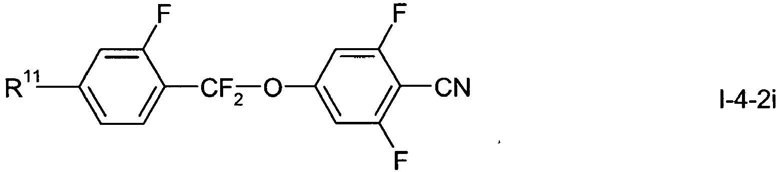 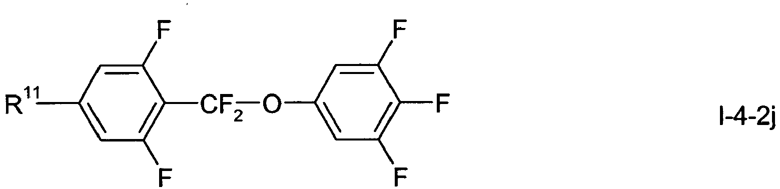 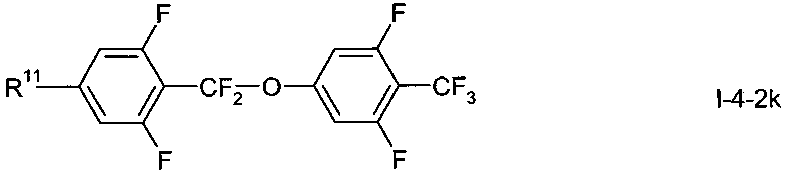 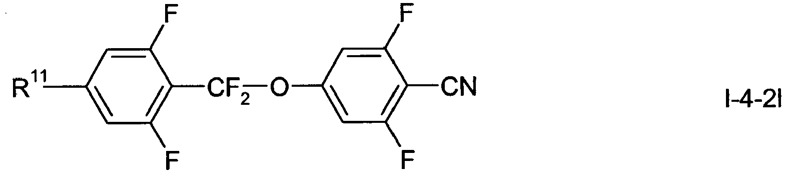 wherein R¹¹ has the meaning given under formula I above and preferably is *n*-alkyl, most preferably ethyl, *n*-propyl, *n*-butyl, *n*-pentyl or *n*-hexyl.

In a preferred embodiment of the present invention the LC-medium comprises one more compounds of formula II 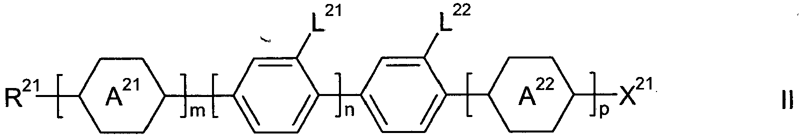 wherein
- R²¹: has one of the meanings given for R¹¹ under formula I above,
- X²¹: has one of the meanings given for X¹¹ under formula I above,
- A²¹: has one of the meanings given for A¹¹ under formula I above,
- A²²: has one of the meanings given for A¹² under formula I above,
- L²¹, L²⁴: are independently of each other H or F.
- m: is 0 or 1,
- n: is 0, 1 or 2,
- p: is 0 or 1 and
- m+n+p: is 1, 2 or 3.

In a preferred embodiment of the present invention the mesogenic media comprise one more compounds of formula II-1 or II-2 or a combination thereof.

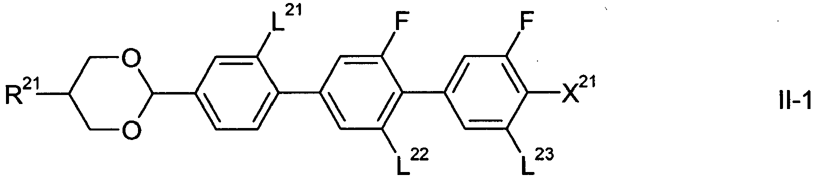

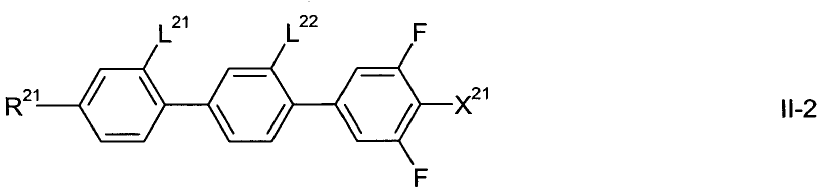

Compounds of formula II-1 are preferably selected from the group of compounds of its sub-formulae II-1-1a and II-1-1b. 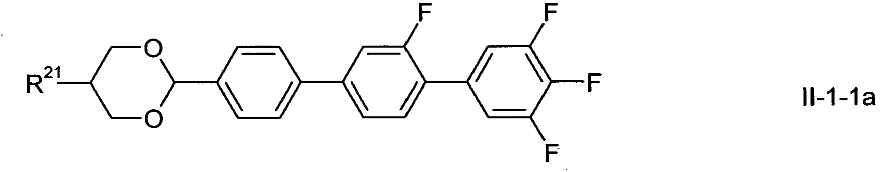 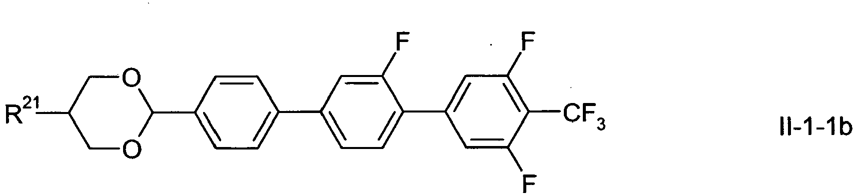 wherein R²¹ has the meaning defined above in formula I and is preferably *n*-butyl or *n*-pentyl.

Compounds of formula II-2 are preferably selected from the group of compounds of its sub-formulae II-2-1 to II-2-8, preferably of formula 11-2-1 to II-2-4, most preferably of formula II-2-3, 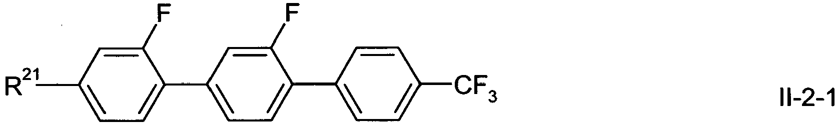 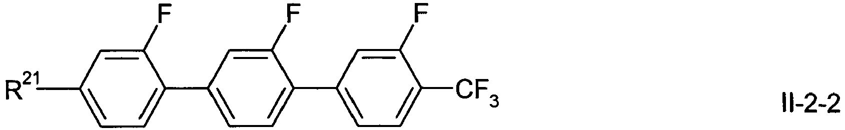 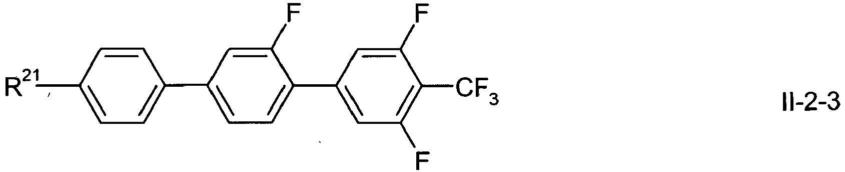 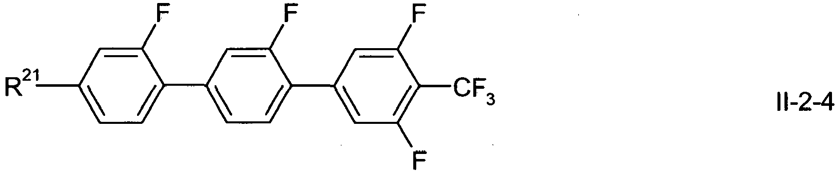 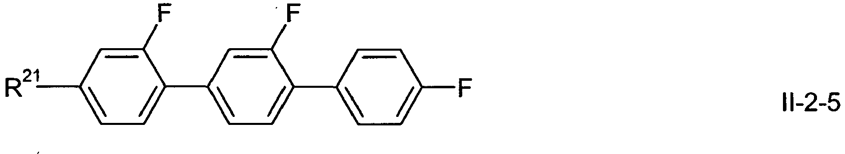 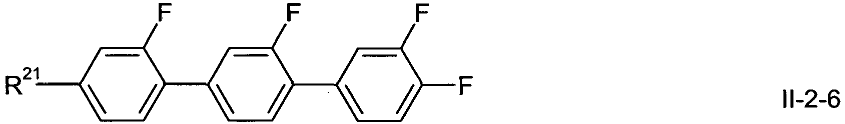 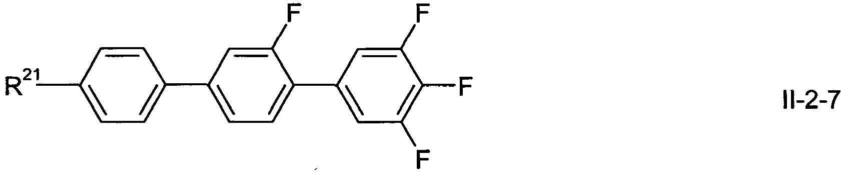 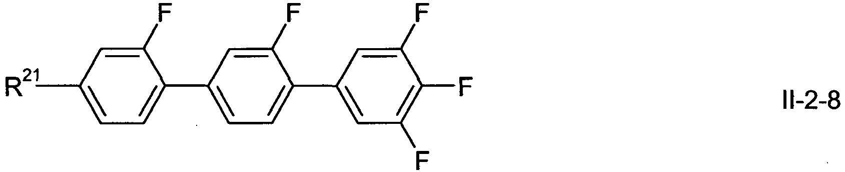 wherein R²¹ has the meaning given under formula II above and preferably is *n*-butyl or *n*-pentyl.

An alkyl or an alkoxy radical, i.e. an alkyl where the terminal CH₂ group is replaced by -O-, in this application may be straight-chain or branched. It is preferably straight-chain, has 1, 2, 3, 4, 5, 6, 7 or 8 carbon atoms and accordingly is preferably methyl, ethyl, propyl, butyl, pentyl, hexyl, heptyl, octyl, ethoxy, propoxy, butoxy, pentoxy, hexoxy, heptoxy, or octoxy, furthermore nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. an alkyl group in which one non-terminal CH₂ group is replaced by -O-, is preferably straight-chain 2-oxapropyl (= methoxymethyl), 2- (= ethoxymethyl) or 3-oxabutyl (= 2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

An alkenyl group, i.e. an alkyl group wherein one or more CH₂ groups are replaced by -CH=CH-, may be straight-chain or branched. It is preferably straight-chain, has 2 to 10 C atoms and accordingly is preferably vinyl, prop-1-, or prop-2-enyl, but-1-, 2- or but-3-enyl, pent-1-, 2-, 3- or pent-4-enyl, hex-1-, 2-, 3-, 4- or hex-5-enyl, hept-1-, 2-, 3-, 4-, 5- or hept-6-enyl, oct-1-, 2-, 3-, 4-, 5-, 6- or oct-7-enyl, non-1-, 2-, 3-, 4-, 5-, 6-, 7- or non-8-enyl, dec-1-, 2-, 3-, 4-, 5-, 6-, 7-, 8- or dec-9-enyl.

Especially preferred alkenyl groups are C₂-C₇-1E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl. Examples for particularly preferred alkenyl groups are vinyl, 1 E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 C-atoms are generally preferred.

In an alkyl group, wherein one CH₂ group is replaced by -O- and one by -CO-, these radicals are preferably neighboured. Accordingly these radicals together form a carbonyloxy group -CO-O- or an oxycarbonyl group -O-CO-. Preferably such an alkyl group is straight-chain and has 2 to 6 C atoms.

It is accordingly preferably acetyloxy, propionyloxy, butyryloxy, pentanoyloxy, hexanoyloxy, acetyloxymethyl, propionyloxymethyl, butyryloxymethyl, pentanoyloxymethyl, 2-acetyloxyethyl, 2-propionyloxyethyl, 2-butyryloxyethyl, 3-acetyloxypropyl, 3-propionyloxypropyl, 4-acetyloxybutyl, methoxycarbonyl, ethoxycarbonyl, propoxycarbonyl, butoxycarbonyl, pentoxycarbonyl, methoxycarbonylmethyl, ethoxycarbonylmethyl, propoxycarbonylmethyl, butoxycarbonylmethyl, 2-(methoxycarbonyl)ethyl, 2-(ethoxycarbonyl)ethyl, 2-(propoxycarbonyl)ethyl, 3-(methoxycarbonyl)propyl, 3-(ethoxycarbonyl)propyl, 4-(methoxycarbonyl)-butyl.

An alkyl group wherein two or more CH₂ groups are replaced by -O- and/or -COO-, it can be straight-chain or branched. It is preferably straight-chain and has 3 to 12 C atoms. Accordingly it is preferably bis-carboxymethyl, 2,2-bis-carboxy-ethyl, 3,3-bis-carboxy-propyl, 4,4-bis-carboxybutyl, 5,5-bis-carboxy-pentyl, 6,6-bis-carboxy-hexyl, 7,7-bis-carboxy-heptyl, 8,8-bis-carboxy-octyl, 9,9-bis-carboxy-nonyl, 10,10-bis-carboxydecyl, bis-(methoxycarbonyl)-methyl, 2,2-bis-(methoxycarbonyl)-ethyl, 3,3-bis-(methoxycarbonyl)-propyl, 4,4-bis-(methoxycarbonyl)-butyl, 5,5-bis-(methoxycarbonyl)-pentyl, 6,6-bis-(methoxycarbonyl)-hexyl, 7,7-bis-(methoxycarbonyl)-heptyl, 8,8-bis-(methoxycarbonyl)-octyl, bis-(ethoxycarbonyl)-methyl, 2,2-bis-(ethoxycarbonyl)-ethyl, 3,3-bis-(ethoxycarbonyl)-propyl, 4,4-bis-(ethoxycarbonyl)-butyl, 5,5-bis-(ethoxycarbonyl)-hexyl.

A alkyl or alkenyl group that is monosubstituted by CN or CF₃ is preferably straight-chain. The substitution by CN or CF₃ can be in any desired position.

An alkyl or alkenyl group that is at least monosubstituted by halogen, it is preferably straight-chain. Halogen is preferably F or Cl, in case of multiple substitution preferably F. The resulting groups include also perfluorinated groups. In case of monosubstitution the F or Cl substituent can be in any desired position, but is preferably in ω-position. Examples for especially preferred straight-chain groups with a terminal F substituent are fluoromethyl, 2-fluoroethyl, 3-fluoropropyl, 4-fluorobutyl, 5-fluoropentyl, 6-fluorohexyl and 7-fluoroheptyl. Other positions of F are, however, not excluded.

Halogen means F, Cl, Br and I and is preferably F or Cl, most preferably F.

The compounds of formula I and II are accessible by the usual methods known to the expert. Starting materials are either commercially available or accessible by published methods.

Preferably the first fluid according to the instant invention comprises one or more compounds selected from the group of compounds of formulae I and II.

The concentration of the individual compounds in the first fluid according to the present invention are preferably in the range from 0.5 % or more to 70 % or less, more preferably in the range from 1 % or more to 60 % or less and most preferably in the range from 5 % or more to 50 % or less.

The first fluid comprises a mixture of one or more compounds selected from the group of compounds of formulae I and II, preferably in a total concentration in the range from 70% or more to 100.0% or less, preferably from 80 % or more to 100.0 % or less and most preferably from 90 % or more to 100.0 % or less.

In particular, the first fluid preferably comprises one or more compounds of formula I in a total concentration in the range from 40 % or more to 100.0 % or less, preferably from 60 % or more to 90 % or less and most preferably from 80 % or more to 90 % or less.

In case the first fluid comprises one or more compounds formula II, the total concentration of these compounds preferably is in the range from 1 % or more to 30 % or less, preferably from 5 % or more to 25 % or less and most preferably from 10 % or more to 20 % or less.

Preferred embodiments are indicated below:
- the first fluid comprises one, two, three, four or more compounds of formula I, preferably of formula I-1, and/or
- the first fluid comprises one, two or more compounds of formula II, preferably of formula II-2.

The compounds of the formulae I and II are colourless, stable and readily miscible with one another and with other liquid-crystalline materials.

The optimum mixing ratio of the compounds of the formulae I and II depends substantially on the desired properties, on the choice of the components of the formulae I or II, and on the choice of any other components that may be present. Suitable mixing ratios within the range given above can easily be determined from case to case.

The total amount of compounds of the formulae I and II in the first fluid is in many cases not crucial. The mixtures can therefore comprise one or more further mesogenic compounds for the purposes of optimisation of various properties. Such compounds are known to the person skilled in the art. However, the observed effect on the operating voltage and the operating temperature range is generally greater, the higher the total concentration of compounds of the formulae I and II.

In a particularly preferred embodiment, the media according to the invention comprise one or more compounds each of the formulae I and II. A favourable synergistic effect with the compounds of the formula I results in particularly advantageous properties. In particular, mixtures comprising compounds of formula I and of formula II are distinguished by their low operating voltages.

The individual compounds of the formulae I and II, which can be used in the media according to the invention, are either known or can be prepared analogously to the known compounds.

In another preferred embodiment the first fluid comprises one or more compounds selected from the group of compounds of formula I and/or II, and additionally non-mesogenic compounds.

Said non mesogenic compounds are used to adapt the properties of the first fluid according to the needs of the optical component and are preferably high boiling organic liquids, preferably selected from 3-phenoxytoluene, butoxybenzene, benzyl methyl ether, benzyl ethyl ether, benzyl propyl ether, benzyl butyl ether, 1,4-benzodioxane, dipropoxybenzene, 2,5-dimethoxytoluene, 4-ethylphenetole, 1,2,4-trimethoxybenzene, 1,2-dimethoxybenzene, 1,3-dimethoxybenzene, dibenzyl ether, 4-tert.-butylanisole, anisole, phenetole, 2-methoxytoluene, 3-methoxytoluene, 4-methoxytoluene, 2,2-dimethyl-1,3-bonzodioxole, 1,8-cineole, 2,3-dihydro-2-methylbenzofuran, 2,3-dihydrobenzofuran, 3,5-dimethylanisole, 2,5-dimethylanisole, 4-ethylanisole, 1,2-methylenedioxybenzene.

Liquid means that the substance has a melting point below room temperature.

High boiling according to the present invention means that the boiling point of the liquid at normal pressure is above 150°C, preferably above 180 °C, most preferably above 200°C.

In a preferred embodiment of the present invention the first fluid is a nematic liquid crystal.

In another preferred embodiment the first fluid is isotropic at room temperature.

Further it is preferred that the dielectric constant of the first fluid is 100 to 1000 or above, more preferably 200 to 500 or above.

The liquid-crystal mixtures which can be used in accordance with the invention are prepared in a manner conventional per se, for example by mixing one or more compounds of the formula I with one or more compounds of the formulae II or with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

In the present invention and especially in the following examples, the structures of the mesogenic compounds are indicated by means of abbreviations, also called acronyms. In these acronyms, the chemical formulae are abbreviated as follows using Tables A to C below. All groups CₙH₂ₙ₊₁, CₘH₂ₘ₊₁ and CₗH₂ₗ₊₁ or CₙH₂ₙ₋₁, CₘH₂ₘ₋₁ and CH₂ₗ₋₁ denote straight-chain alkyl or alkenyl, preferably 1 E-alkenyl, each having n, m and I C atoms respectively. Table A lists the codes used for the ring elements of the core structures of the compounds, while Table B shows the linking groups. Table C gives the meanings of the codes for the left-hand or right-hand end groups. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 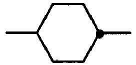 | **P** | 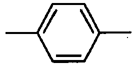 |
| **D** | 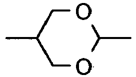 | **DI** | 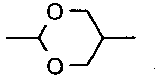 |
| **A** | 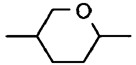 | **AI** | 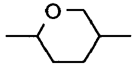 |
| **G** | 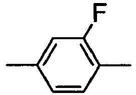 | **GI** | 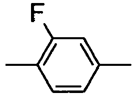 |
| **U** | 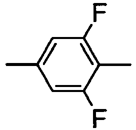 | **UI** | 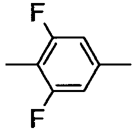 |
| **Y** | 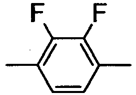 | | |
| **M** | 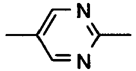 | **MI** | 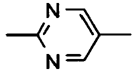 |
| **N** | 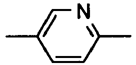 | **NI** | 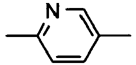 |
| **Np** | 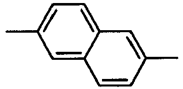 | **dH** | 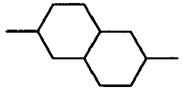 |
| **N3f** | 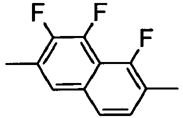 | **N3fl** | 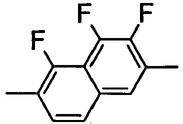 |
| **tH** | 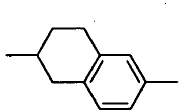 | **tHI** | 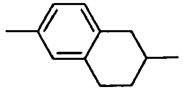 |
| **tH2f** | 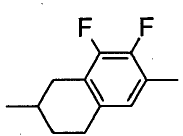 | **tH2fl** | 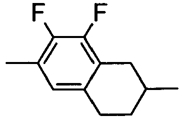 |
| **K** | 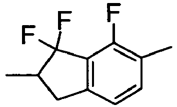 | **KI** | 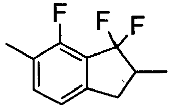 |
| **L** | 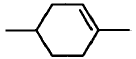 | **LI** | 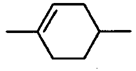 |
| **F** | 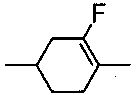 | **FI** | 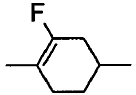 |

**Table B: Linking groups**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | **T** | -C≡C- |

**Table C: End groups**

| **Left-hand side** | | **Right-hand side** | |
|---|---|---|---|
| **Use alone** | | | |
| **-n-** | CₙH₂ₙ₊₁- | **-n** | --CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH-CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH_{2O}- | **-OM** | -OCFH₂ |
| **-DO-** | CF₂HO- | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Use together with one another and/or with others** | | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m each denote integers, and the three dots "..." are place-holders for other abbreviations from this table.

The following table shows illustrative structures together with their respective abbreviations. These are shown in order to illustrate the meaning of the rules for the abbreviations. They furthermore represent compounds which are preferably used.

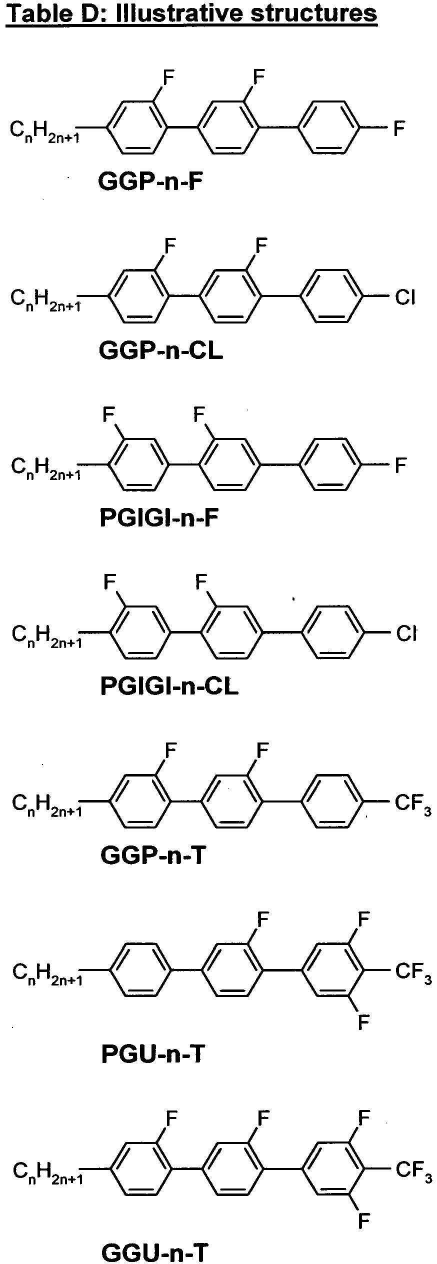

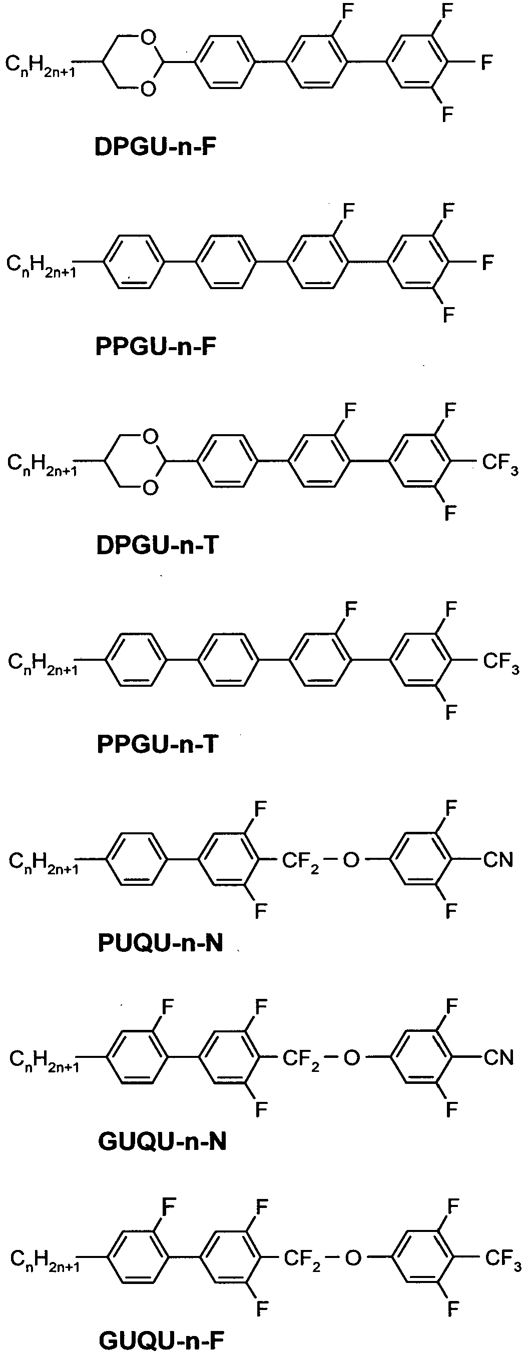

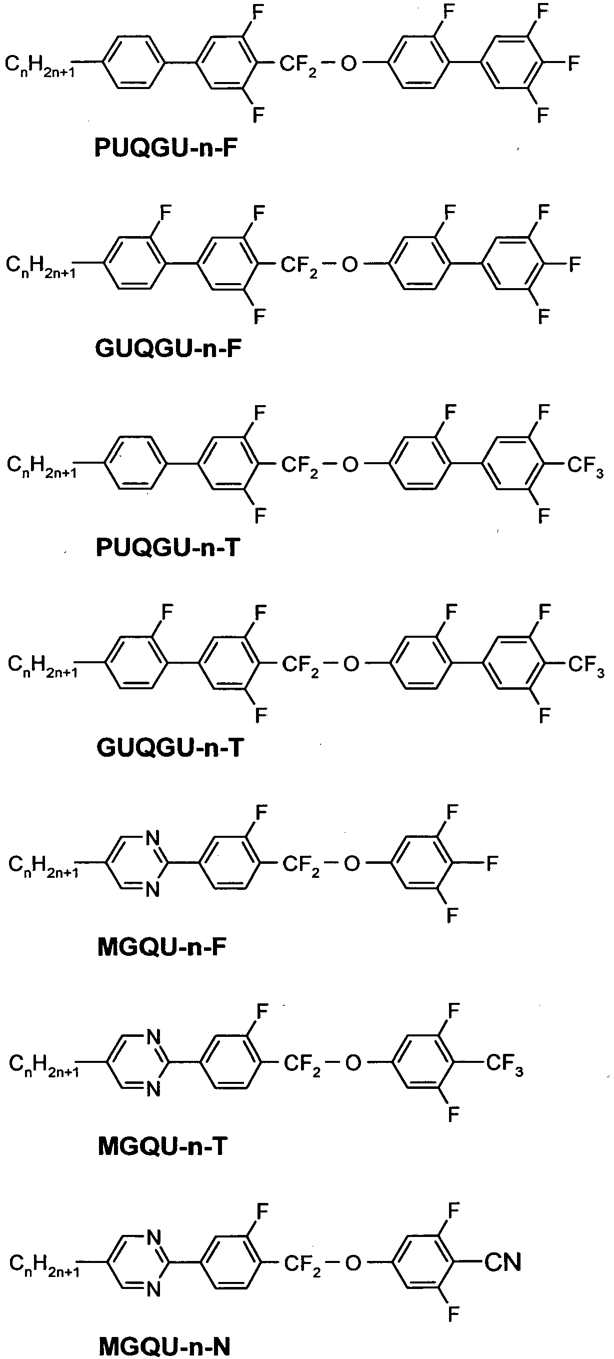

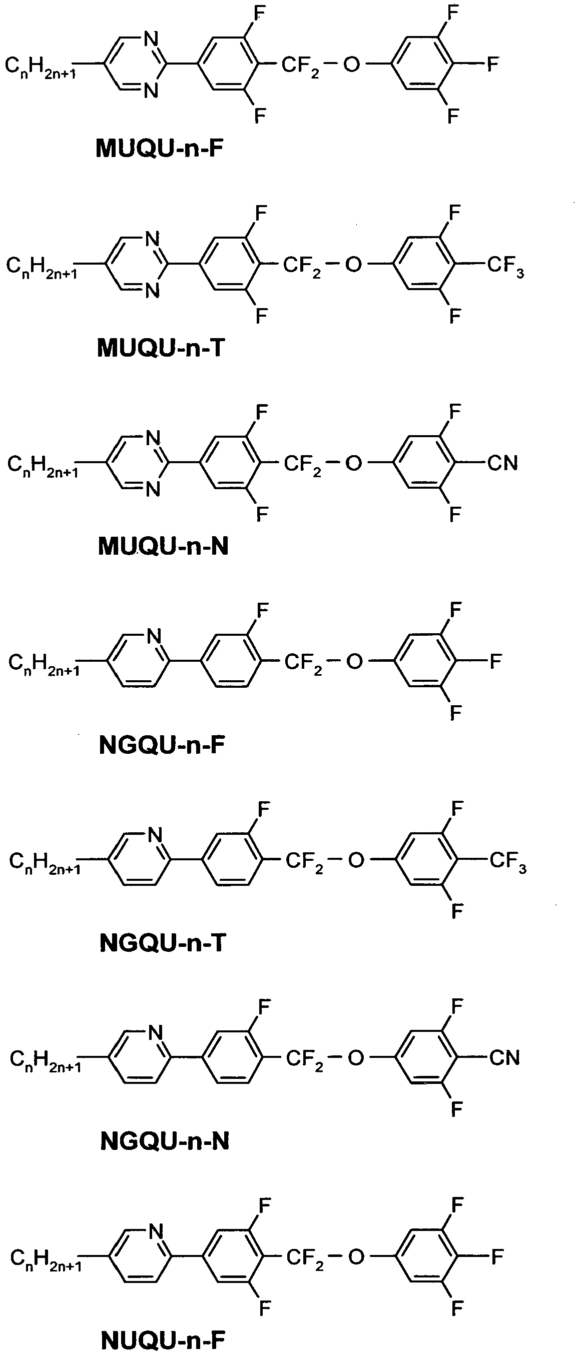

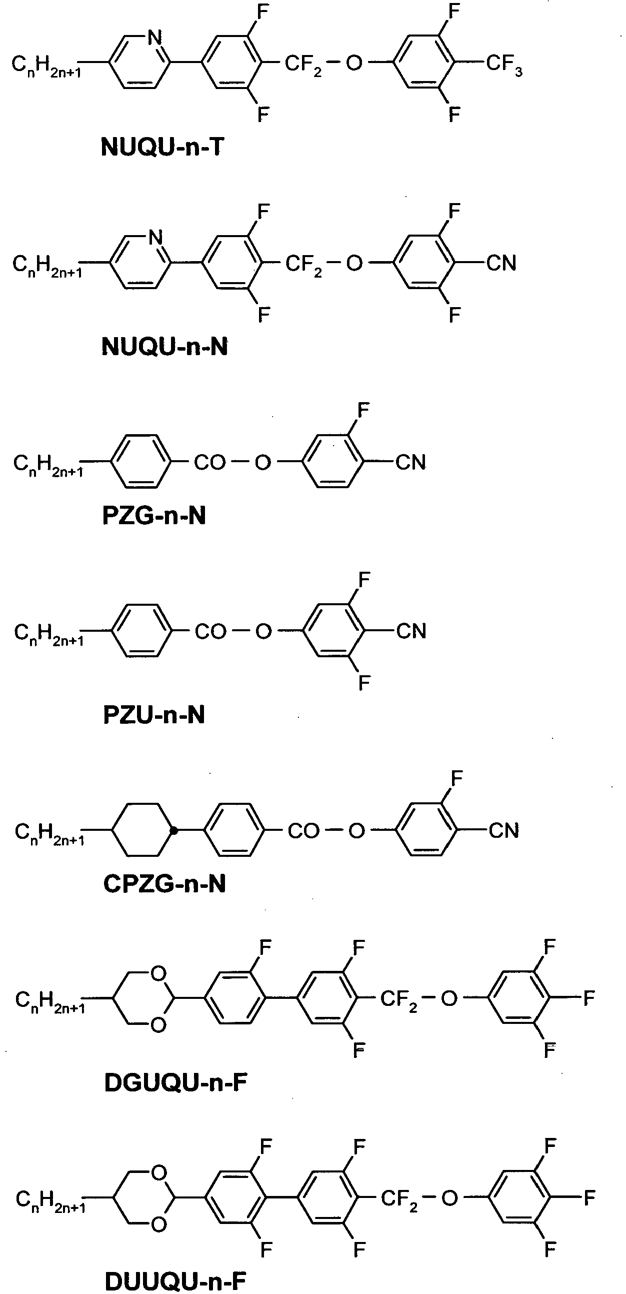

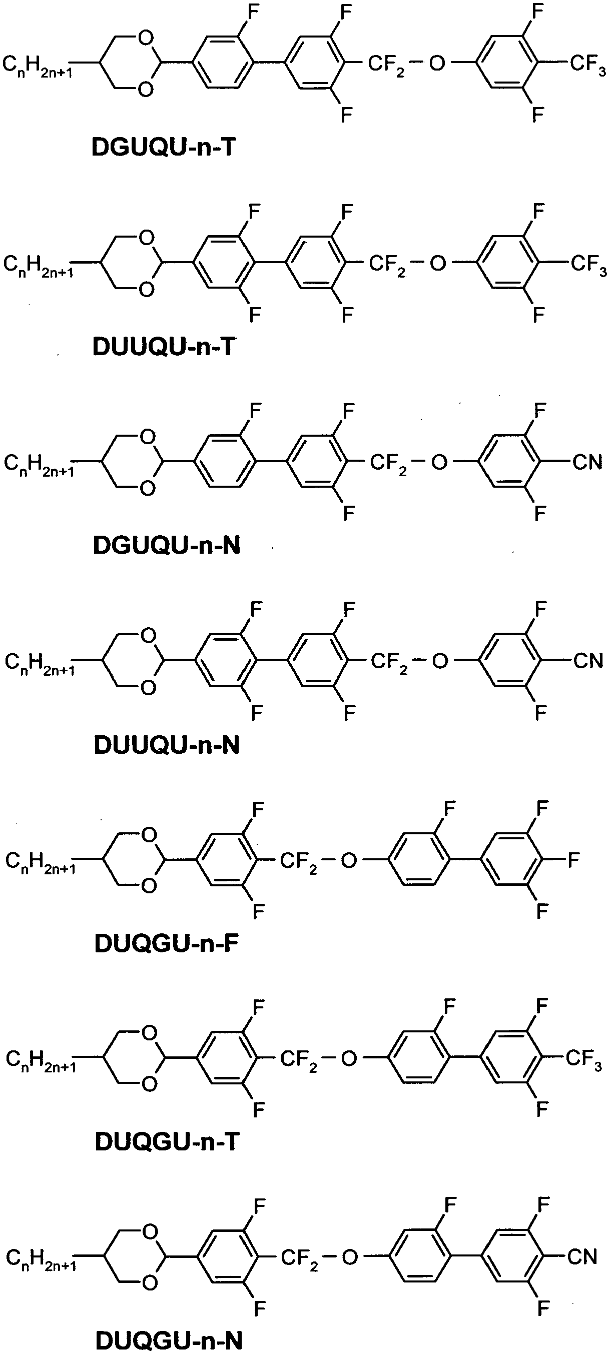

in which n preferably, independently of one another, denotes an integer from 1 to 7, preferably from 2 to 6.

The following table, Table E, shows illustrative compounds which can be used as stabiliser in the mesogenic media according to the present invention.

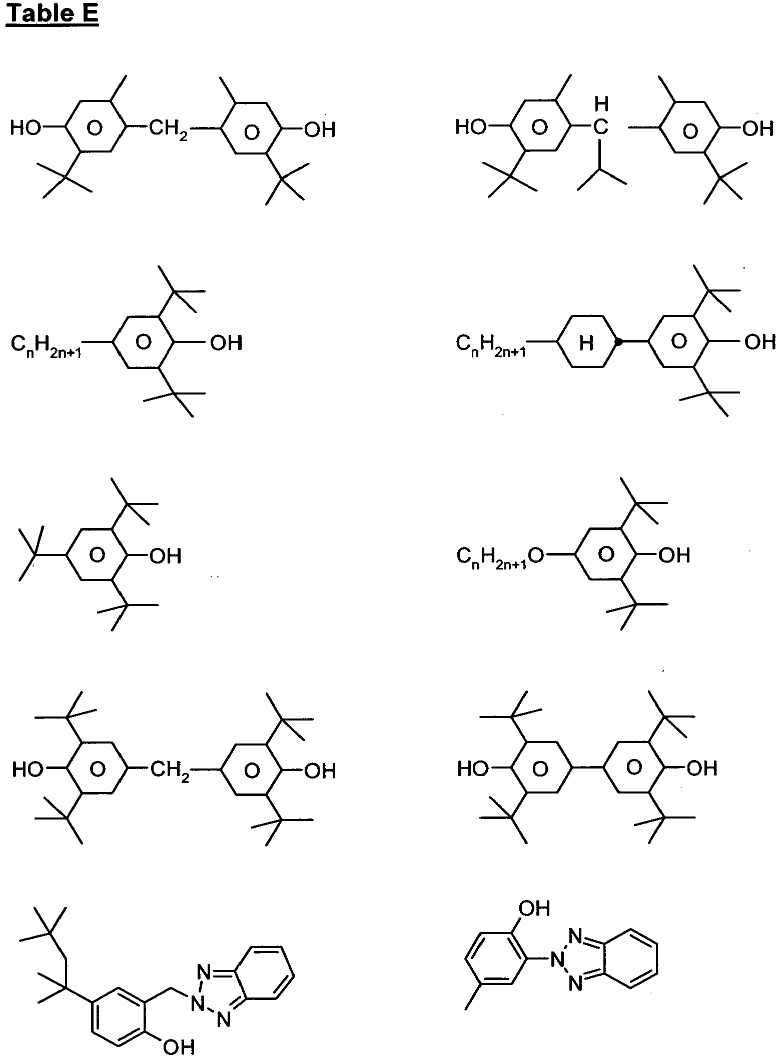

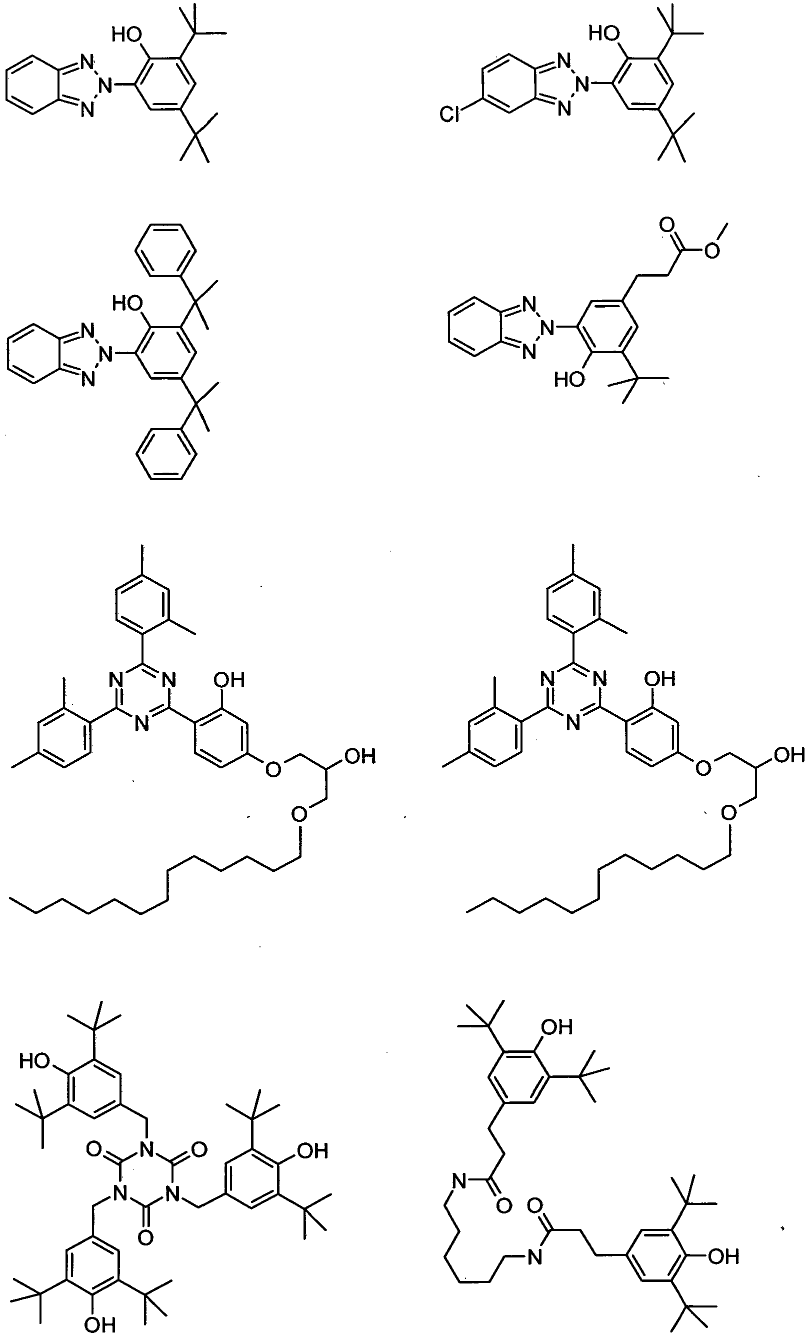

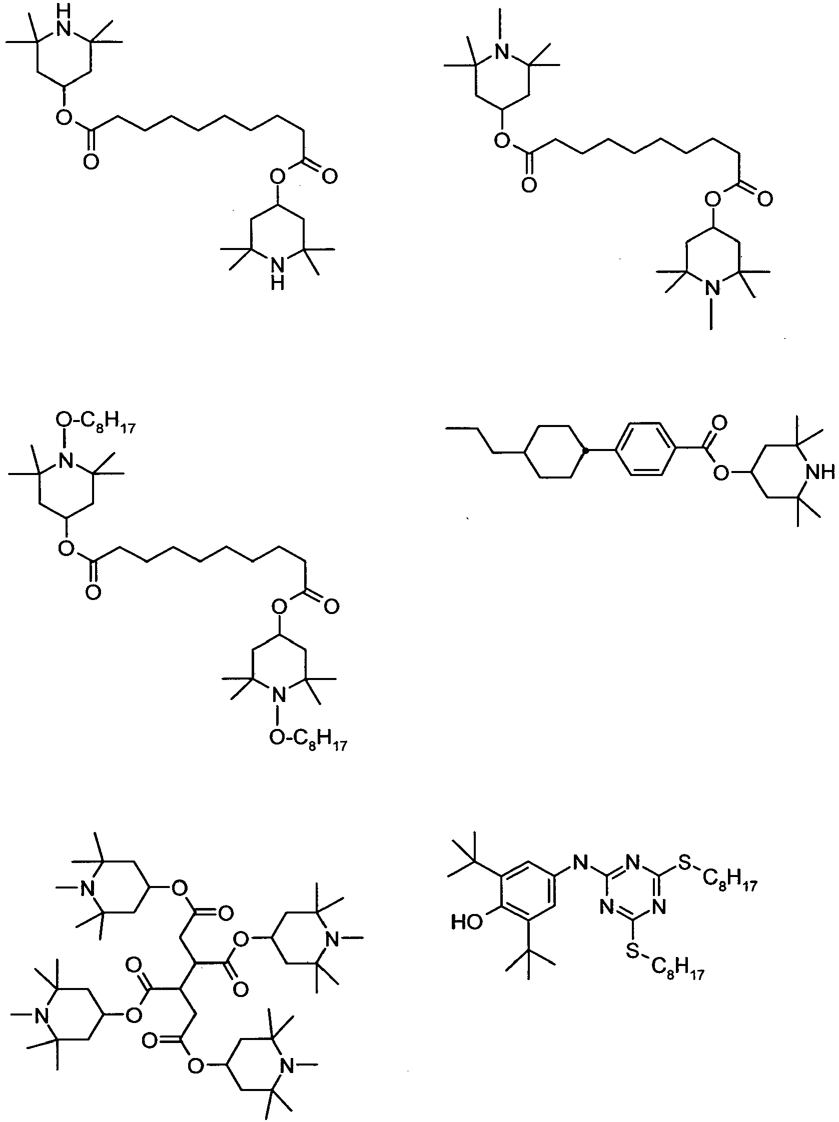

In a preferred embodiment of the present invention, the mesogenic media comprise one or more compounds selected from the group of the compounds from Table E.

The following table, Table F, shows illustrative compounds which can preferably be used as chiral dopants in the mesogenic media according to the present invention.

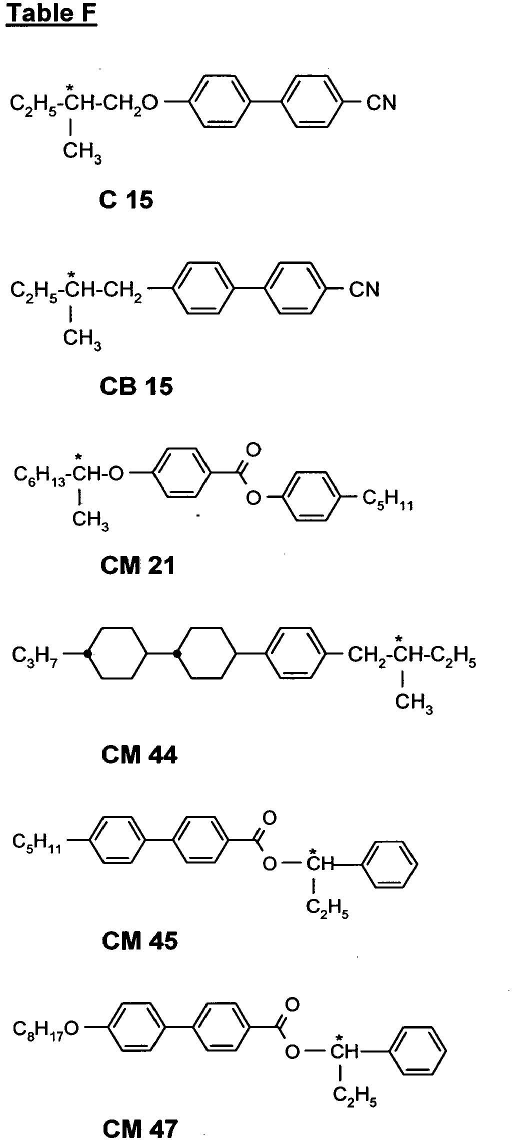

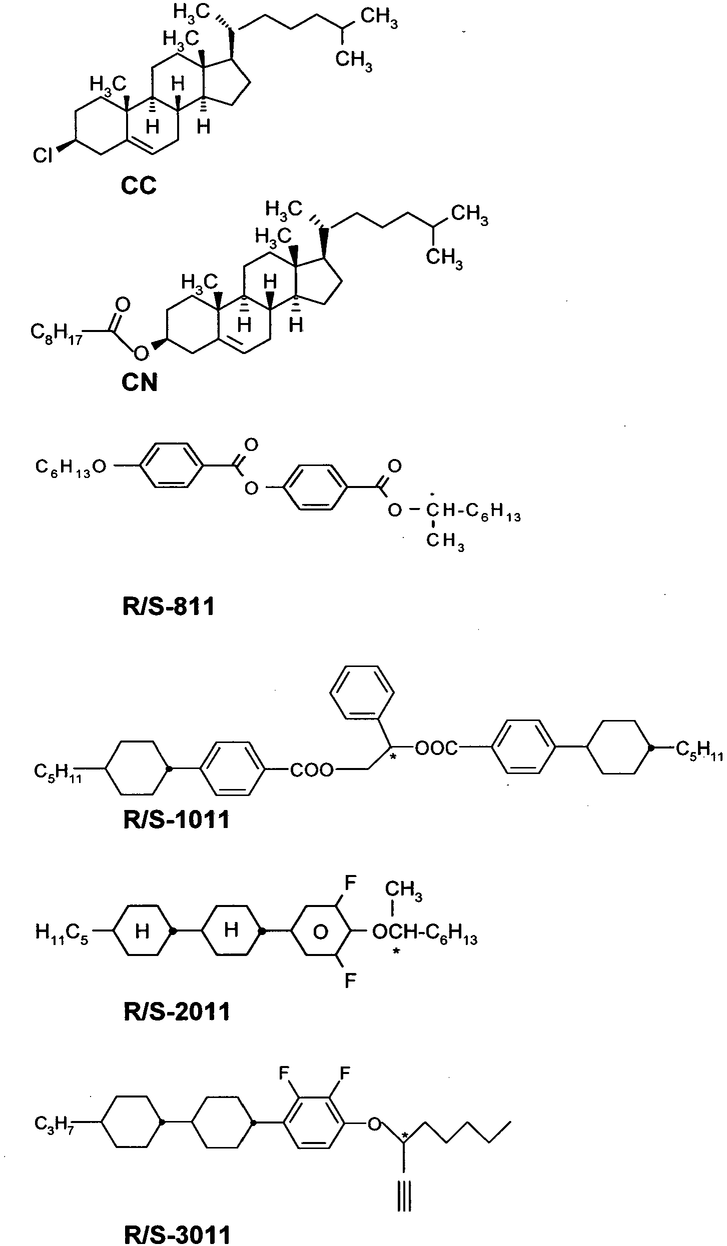

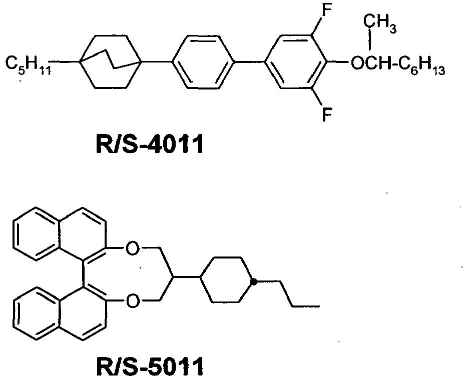

In a preferred embodiment of the present invention, the liquid-crystal media comprise one or more compounds selected from the group of the compounds from Table F.

The mesogenic media according to the present application preferably comprise two or more, preferably four or more, compounds selected from the group consisting of the compounds from the above tables.

The liquid-crystal media according to the present invention preferably comprise
- seven or more, preferably eight or more, compounds, preferably compounds having three or more, preferably four or more, different formulae, selected from the group of the compounds from Table D.

The substrates may be made from any suitable material which allows confinement of the fluid and is preferably an optically isotropic material (i.e. one which has no birefringence), such as glass.

The thickness of the substrate is preferably 0.1mm - 3mm, more preferably 0.5mm-2mm and most preferably 1.0mm-1.5mm. The substrate is preferably transparent in the region of visible light.

The fluid enclosure has an internal volume to receive first and second fluids, preferably in the form of immiscible liquids arranged relative to each other in separate layers. The first fluid is a liquid crystal material, and the second fluid is a non-conductive liquid, preferably a substantially fluorinated liquid. In preferred embodiments, both the liquid crystal and second fluid are substantially transparent to light and each has a different refractive index being different from the other fluid when the liquid crystal is in the isotropic state and when the liquid crystal is birefringent at least one of the uniaxial refractive indices of the liquid crystal is different from the refractive index of the second fluid.

The first and second electrodes are preferably interdigitated electrodes which comprise at least one pair of comb-shaped electrodes being arranged so as to oppose each other with their teeth interleaved. The width of the electrodes is preferably 5-240µm, more preferably 10-150µm, most preferably 25-100µm and can be the same for each electrode or different, preferably the same. The interelectrode gap is preferably 1-100µm, more preferably 5-75µm, most preferably 10-50µm and can be the same for each gap or different, preferably the same.

Preferably, the interelectrode gap is smaller than the electrode linewidth by a factor in the range of 0.9 to 0.1, more preferably 0.25 to 0.75 and most preferably 0.4 to 0.6. The electrodes are preferably transparent and may be made from any suitable transparent conductive material, preferably indium tin oxide (ITO), indium zinc oxide (IZO), antimony tin oxide (ATO), RuO₂ or PEDOT, most preferably ITO. The electrodes preferably have a resistance per square below 100 Ω / □.

In a preferred refinement of the present invention the electrodes are covered with a polymer layer (30) having high transparency, preferably a polyimide or Teflon®, to guard against charge injection from the electrodes (20, 21), or to promote wetting of the liquid crystal. Further, it can be preferred that said polymer layer is a liquid crystal orientation layer (rubbed polyimide) to promote preferred alignment of the liquid crystal.

Preferably the upper substrate (11) is untreated.

Further it can be preferred that the upper substrate is covered with a polymer layer (31) having high transparency, preferably a polyimide or Teflon®.

References herein to "transparent" are to be taken as meaning that the material or substance permits most, if not all, of the light incident on the material or substance to pass therethrough without significant attenuation. Moreover, all references to "light", "incident light" and associated terms, are to be understood as referring to in particular, visible light, but may also include other radiations from other regions of the electromagnetic spectrum, e.g. ultra-violet and infra-red.

In all embodiments of the present invention the voltage applied can be either d.c. or a.c., preferably a.c.

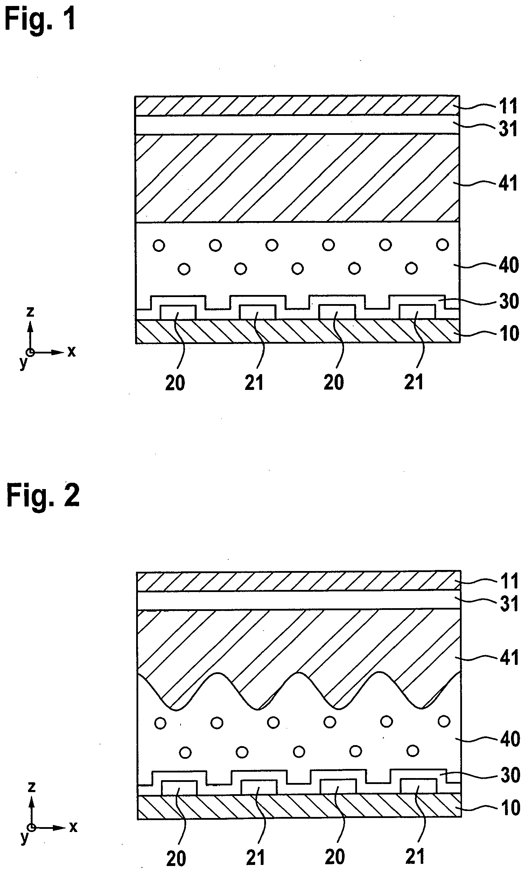

Fig. 2 illustrates the effect of applying a voltage to the first and second electrodes of the device of Fig. 1. When a voltage is applied, a static wrinkle is formed at the interface between the first fluid (40) and the second fluid (41), the wrinkle height being a function of the voltage.

As a result of the applied voltage, the interface between first fluid (40) and the second fluid (41) now has taken the shape of a periodic wave, thus forming a sequence of cylindrical lenses. Since the height of the wrinkles depends on the voltage the focal length of these cylindrical lenses can be controllably adjusted as a result of varying the voltage applied to the electrodes.

When the applied voltage between the first and second electrodes (20, 21) is lowered or reduced to zero the system reverts to the initial state shown in figure 1.

The following abbreviations and symbols are used:
- nₑ: extraordinary refractive index at 20°C and 589 nm,
- nₒ: ordinary refractive index at 20°C and 589 nm,
- Δn: optical anisotropy at 20°C and 589 nm,
- ε⊥: dielectric susceptibility perpendicular to the director at 20°C and 1 kHz,
- ε∥: dielectric susceptibility parallel to the director at 20°C and 1 kHz,
- Δε: dielectric anisotropy at 20°C and 1 kHz,
- cl.p., T(N,I): clearing point [°C],

Unless explicitly noted otherwise, all concentrations in the present application are indicated in per cent by weight and relate to the corresponding mixture as a whole without solvents.

Unless explicitly noted otherwise, all temperature values indicated in the present application, such as, for example, the melting point T(C,N), the transition from the smectic (S) to the nematic (N) phase T(S,N) and the clearing point T(N,I), are indicated in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Darmstadt, Germany, and apply to a temperature of 20°C, and Δn is determined at 589 nm and Δε at 1 kHz, unless explicitly indicated otherwise in each case.

The liquid-crystalline properties of the individual compounds are, unless indicated otherwise, determined in the nematic host mixture ZLI-4792 (commercially available from Merck KGaA, Darmstadt) at a concentration of 10%.

"Room temperature" means 20°C, unless indicated otherwise.

### Examples

The examples below illustrate the present invention without limiting it in any way.

A liquid crystalline mixture M-1 is prepared as follows.

| Composition and properties liquid crystal mixture M-1 | | | | |
|---|---|---|---|---|
| Composition | | | Physical Properties | |
| Compound | | Conc. | | |
| No. | Abbreviation | / mass-% | T(N,I) | = 72.5 °C |
| 1 | GUQGU-3-F | 8.0 | nₒ(20°C,589 nm) | = 1.4882 |
| 2 | GUQGU-4-F | 6.0 | nₑ(20°C,589 nm) | = 1.6811 |
| 3 | GUQGU-5-F | 4.0 | | |
| 4 | GUUQU-3-N | 6.0 | Δn(20°C,589 nm) | = 0.1929 |
| 5 | GUQU-3-F | 7.0 | | |
| 6 | GUQU-4-F | 6.0 | ε_{⊥}(20°, 1 kHz) | = 11.5 |
| 7 | GUQGU-2-T | 12.0 | ε_{∥}(20°, 1 kHz) | = 213.6 |
| 8 | GUQGU-3-T | 12.0 | Δε(20°, 1 kHz) | = 202.1 |
| 9 | GUQGU-4-T | 12.0 | | |
| 10 | GUQGU-5-T | 12.0 | | |
| 11 | DPGU-4-F | 8.0 | | |
| 12 | PGU-5-T | 3.0 | | |
| 13 | PGU-4-T | 4.0 | | |
| ∑ | | 100.0 | | |

A liquid crystalline mixture M-2 is prepared as follows.

| Composition and properties liquid crystal mixture M-2 | | | | |
|---|---|---|---|---|
| Composition | | | Physical Properties | |
| Compound | | Conc. | | |
| No. | Abbreviation | / mass-% | T(N,I) | = 65 °C |
| 1 | GUUQU-3-N | 4.0 | | |
| 2 | GUUQU-4-N | 8.0 | | |
| 3 | GUUQU-5-N | 8.0 | | |
| 4 | GUQU-3-F | 6.0 | | |
| 5 | GUQU-4-F | 6.0 | | |
| 6 | GUQGU-2-T | 8.0 | ε_{⊥}(20°, 1 kHz) | = 16.0 |
| 7 | GUQGU-3-T | 8.0 | ε_{∥}(20°, 1 kHz) | = 392.8 |
| 8 | GUQGU-4-T | 8.0 | Δε(20°, 1 kHz) | = 376.8 |
| 9 | GUQGU-5-T | 8.0 | | |
| 10 | PGU-4-T | 8.0 | | |
| 11 | PGU-5-T | 8.0 | | |
| 12 | DUUQU-4-F | 6.0 | | |
| 13 | DUUQU-5-F | 6.0 | | |
| 14 | DGUQU-4-F | 8.0 | | |
| ∑ | | 100.0 | | |

Table 1 summarises the properties of M-1 and M-2 in comparison with isotropic liquid TTE and commercially available liquid crystal E7.

**Table 1**

| Material | ε∥ | ε⊥ | nₒ | nₑ | T (N,I) |
|---|---|---|---|---|---|
| Trimethylolpropa ne triglycidyl ether (TTE) | 13.5 | 13.5 | 1.477 | 1.477 | not nematic |
| E7 | 19.5 | 5.2 | 1.65 | 1.50 | 60 |
| M-1 | 213.6 | 11.5 | 1.68 | 1.49 | 73 |
| M-2 | 392.8 | 16.0 | | 1.44 | 65 |

From the materials shown in table 1, cylindrical lens elements were fabricated and characterised in the following manner.

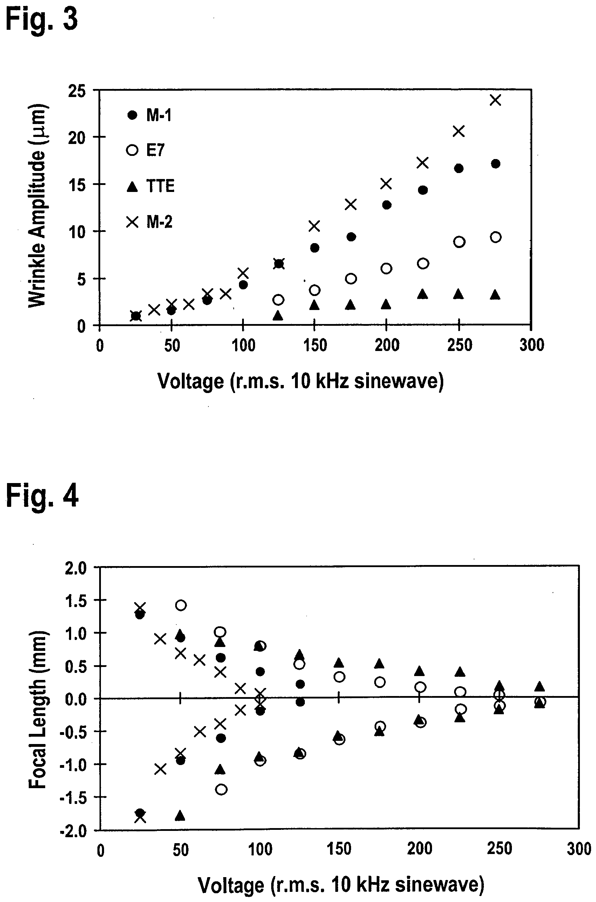

Single fluid experiments were first performed to demonstrate the effect and to characterise the lens elements using a first fluid (40) without application of a second fluid (41). Single fluid experiments were performed with a borosilicate glass slide substrate. The substrate had been precoated with an approximately 25 nm thick layer of indium tin oxide of resistivity approximately 100 Ohm/square. This coating was provided commercially by Präzisions Glas and Optik GmbH, Iserlohn, Germany. Standard photolithographic procedures were used to etch and pattern the indium tin oxide layer to produce an array of co-planar interdigital stripe electrodes, (corresponding to 20, 21 in Fig. 1), as well as contact pads. Electrodes (20) were connected to an indium tin oxide contact pad on one side of the substrate in the positive y direction, and electrodes (21) were connected to a separate contact pad on the other side of the substrate in the negative y direction. Electrodes (20) and (21) were co-located and interleaved on a square region of the substrate which typically covered an area of 12mm by 12mm. The substrate and the electrodes were coated with an approximately 0.8µM thick layer of photoresist (commercial material SU8-10, MicroChem Corp., Newton, MA, USA) which had been cured and hardened by exposure to UV radiation and heating. The SU8-10 layer was removed from above the contact pads. A droplet of liquid was dispensed onto the electrode area of the substrate using a "Gilson Pipetman" micropipette (Gilson, Inc., Middleton, USA). Electrical addressing of the device was performed with a sinewave voltage, typically with 10 kHz frequency, applied to alternate electrodes via a contact pad. Interposed electrodes were connected to earth potential via the other contact pad. The voltage was provided by a wave form generator connected to a PZD700A-1 amplifier (Trek Inc., Medina, New York, USA). Applying a voltage amplitude typically above 25 V (r.m.s.) for M-1 and M-2, or typically above 125 V (r.m.s.) for E7 or TTE, spread the fluid film until it formed a thin layer coating the substrate in the region on top of the co-located interleaved electrodes. Further increase in the voltage amplitude increased the amplitude of wrinkles on the fluid-air surface of the film. Side images of the liquid film under diffuse white light side illumination were taken from the y-direction using a standard USB video camera (for example, DCC1645C, ThorLabs, Ely, UK) typically fitted with a 10x objective lens allowed the wrinkle on top of the fluid to be viewed. By focusing on a region at the top of the fluid film these images allowed the peak to trough amplitude of the wrinkle to be measured as different r.m.s. amplitudes of the voltage were applied, giving the data for Fig. 3. The focal length values on the vertical axis on Fig. 4 were obtained using a top view of the substrate with a standard USB video camera typically fitted with a 10x objective lens looking down from the z direction whist the substrate was illuminated from underneath with collimated white light from an LED. The height of the USB video camera was adjusted using a micrometer operated translation stage in the z-direction. The camera was first focused onto the top of the substrate in a region where there was no fluid present. It was moved sideways until it was positioned above the region containing the fluid, spread under voltage. The height of the camera was then raised until a series of sharp parallel focused lines of light were visible. The distance of the height raised was recorded as the focal length in the positive direction, shown in Fig. 4. A similar process was used to record the focal length in the negative direction, shown in Fig. 4, except the height of the camera was lowered relative to its position when focused on the substrate.

From Fig. 3 it can be seen that for a given voltage higher wrinkle amplitudes can be achieved using the liquid materials M-1 and M-2 compared to liquid crystal E7 and polar liquid TTE.

Correspondingly, when using M-1 or M-2, the focal length can be shortened at relatively lower voltages, as shown in Fig. 4.

### Application of second fluid

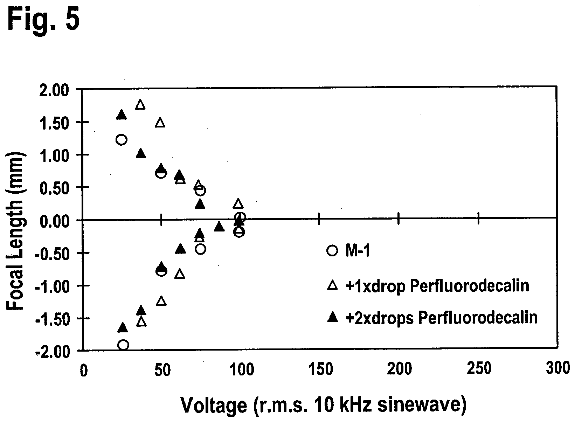

The data shown in Fig. 5 was recorded using the same experimental technique and substrate as described above for Fig. 4. The difference is that a cuvette was glued to the substrate to allow a layer of liquid perfluorodecalin (fluid 41 in Fig. 2) to remain on top of and to immerse the spread layer of liquid crystal fluid M-1 (fluid 40 in Fig. 2).

An approx. 20 µm thick film of LC-mixture M-1 (Electrodes: linewidth 80µm, gaps 40µm) as the first fluid was covered with a layer of perfluorodecalin as the second fluid.

As can be seen from Fig. 5, the switching behaviour, (*i.e.* the change of the focal length with the applied voltage) is similar after addition of the second liquid layer.

## Claims

1. Material combination containing
a first fluid, comprising a liquid crystal material, and
an electrically insulating second fluid substantially not miscible with the first fluid comprising one or more substantially fluorinated or perfluorinated organic compounds
which are in contact with each other along a phase boundary.

2. Material combination according to claim 1, wherein the second fluid consists of one or more perfluorinated organic compounds.

3. Material combination according to claim 1 or 2, **characterised in that** the first fluid comprises one or more compounds of formula I 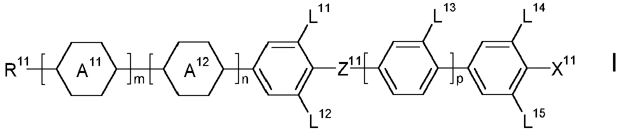 wherein
L¹¹ to L¹⁵ are independently of each other H or F,
R¹¹ is alkyl, which is straight chain or branched, is unsubstituted, mono- or poly-substituted by F, Cl or CN, and in which one or more CH₂ groups are optionally replaced, in each case independently from one another, by -O-, -S-, -NR⁰¹-, -SiR⁰¹R⁰²-, -CO-, -C(O)O-, -OC(O)-, -OCO-O-, -S-CO-, -CO-S-, -CY⁰¹=CY⁰²- or -C≡C- in such a manner that -O- and/or -S- atoms are not linked directly to one another,
Y⁰¹, Y⁰² are, independently of each other, F, Cl, or CN, and alternatively one of them may be H,
R⁰¹, R⁰² are, independently of each other, H, or alkyl with 1 to 12 C-atoms,
Z¹¹ denotes -C(O)O- or -CF₂O-,
X¹¹ denotes halogen, CN, SF₅, a mono- or polyhalogenated alkyl or alkoxy having 1 to 6 C-atoms or a mono-, di- or polyhalogenated alkenyl having 2 to 6 C-atoms, 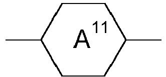 denotes a diradical group selected from the following groups:
a) the group consisting of trans-1,4-cyclohexylene, 1,4-cyclohexenylene, 1,4'-bicyclohexandiyl, in which, in addition, one or more non-adjacent CH₂ groups may be replaced by -O- and/or -S- and in which, in addition, one or more H atoms may be replaced by F,
b) the group consisting of 1,4-phenylene and 1,3-phenylene, in which, in addition, one or two CH groups may be replaced by N and in which, in addition, one or more H atoms may be replaced by F, and 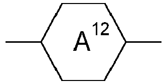 denotes a diradical group selected from the group consisting of 1,4-phenylene and 1,3-phenylene, in which, in addition, one or two CH groups may be replaced by N and in which, in addition, one or more H atoms may be replaced by F,
m is 0 or 1,
n is 0, 1 or 2,
p is 0 or 1 and
m+n+p is 0, 1 or 2.

4. Material combination according to one or more of claims 1 to 3, **characterised in that** the first fluid comprises one or more compounds of formula II 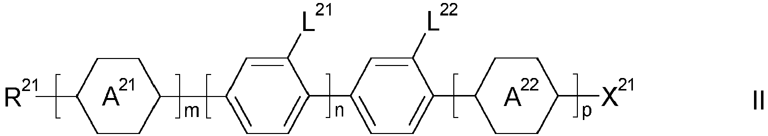 wherein
R²¹ has one of the meanings given for R¹¹ in formula I in claim 3,
X²¹ has one of the meanings given for X¹¹ in formula I in claim 3,
A²¹ has one of the meanings given for A¹¹ in formula I in claim 3,
A²² has one of the meanings given for A¹² in formula I in claim 3,
L²¹, L²² are independently of each other H or F.
m is 0 or 1,
n is 0, 1 or 2,
p is 0 or 1 and
m+n+p is 1, 2 or 3.

5. Material combination according to one or more of claims 1 to 4 with the first fluid being in the isotropic state at room temperature.

6. Material combination according to one or more of claims 1 to 5, **characterised in that** the first fluid has a dielectric constant of 100 to 1000 or above, measured at 20 °C and 1 kHz.

7. Optical component comprising a fluid enclosure comprising
a first substrate,
a second substrate placed opposite the first substrate, and
a material combination according to one or more of claims 1 to 6 disposed between the first substrate and the second substrate.

8. Optical component according to claim 7, where the optical component utilises interdigitated electrodes placed on the first substrate.

9. Optical component according to claim 7 or 8, where the electrodes are covered by a polymer layer.

10. Optical component according to claim 9, where the polymer layer is a liquid crystal orientation layer.

11. Method of production of an optical component according to claim 7 comprising at least the steps A) dispensing a first fluid according to one or more of claims 1, 3 and 4 onto a first substrate, B) dispensing a second fluid according to claim 1 or 2 on top of the first fluid.

12. Optical device comprising an optical component according to one or more of claims 7 to 10.

13. Display device operable in a 2D mode or 3D mode, dynamic lens element, optical shutter, beamsteerer, diffraction grating, or electronic paper display comprising an optical device according to claim 12.

## Patentansprüche

1. Materialkombination enthaltend
eine erste Flüssigkeit, enthaltend ein Flüssigkristallmaterial, und
eine elektrisch isolierende zweite Flüssigkeit, die im Wesentlichen mit der ersten Flüssigkeit nicht mischbar ist und eine oder mehrere weitgehend fluorierte oder perfluorierte organische Verbindungen enthält,
die entlang einer Phasengrenze miteinander in Kontakt stehen.

2. Materialkombination nach Anspruch 1, bei der die zweite Flüssigkeit aus einer oder mehreren perfluorierten organischen Verbindungen besteht.

3. Materialkombination nach Anspruch 1 oder 2, **dadurch gekennzeichnet, dass** die erste Flüssigkeit eine oder mehrere Verbindungen der Formel I 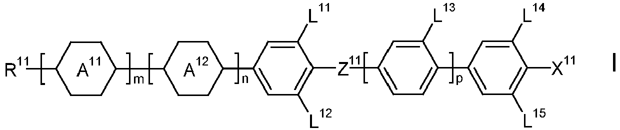 enthält, bei der
L¹¹ bis L¹⁵ unabhängig voneinander H oder F sind,
R¹¹ Alkyl ist, das geradkettig oder verzweigt ist, unsubstituiert oder ein- oder mehrfach durch F, Cl oder CN substituiert ist und worin gegebenenfalls eine oder mehrere CH₂-Gruppen jeweils unabhängig voneinander so durch -O-, -S-, -NR⁰¹-, -SiR⁰¹R⁰²-, -CO-, -C(O)O-, -OC(O)-, -OCO-O-, -S-CO-, -CO-S-, -CY⁰¹=CY⁰²- oder -C≡C- ersetzt sind, dass -O- und/oder -S-Atome nicht direkt miteinander verknüpft sind,
Y⁰¹, Y⁰² unabhängig voneinander F, Cl oder CN sind und einer von ihnen alternativ H sein kann,
R⁰¹, R⁰² unabhängig voneinander H oder Alkyl mit 1 bis 12 C-Atomen sind,
Z¹¹ -C(O)O- oder -CF₂O- bedeutet,
X₁₁ Halogen, CN, SF₅, ein ein- oder mehrfach halogeniertes Alkyl oder Alkoxy mit 1 bis 6 C-Atomen oder ein ein-, zwei- oder mehrfach halogeniertes Alkenyl mit 2 bis 6 C-Atomen bedeutet, 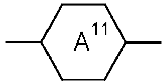 eine diradikalische Gruppe bedeutet, die ausgewählt ist aus den folgenden Gruppen:
a) der Gruppe bestehend aus trans-1,4-Cyclohexylen, 1,4-Cyclohexenylen, 1,4'-Bicyclohexandiyl, worin zusätzlich eine oder mehrere nicht benachbarte CH₂-Gruppen durch -O- und/oder -S- ersetzt sein können und worin zusätzlich ein oder mehrere H-Atome durch F ersetzt sein können,
b) der Gruppe bestehend aus 1,4-Phenylen und 1,3-Phenylen, worin zusätzlich eine oder zwei CH-Gruppen durch N ersetzt sein können und worin zusätzlich ein oder mehrere H-Atome durch F ersetzt sein können, und 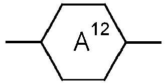 eine diradikalische Gruppe bedeutet, die ausgewählt ist aus der Gruppe bestehend aus 1,4-Phenylen und 1,3-Phenylen, worin zusätzlich eine oder zwei CH-Gruppen durch N ersetzt sein können und worin zusätzlich ein oder mehrere H-Atome durch F ersetzt sein können,
m 0 oder 1 ist,
n 0, 1 oder 2 ist,
p 0 oder 1 ist und
m+n+p 0, 1 oder 2 ist.

4. Materialkombination nach einem oder mehreren der Ansprüche 1 bis 3, **dadurch gekennzeichnet, dass** die erste Flüssigkeit eine oder mehrere Verbindungen der Formel II 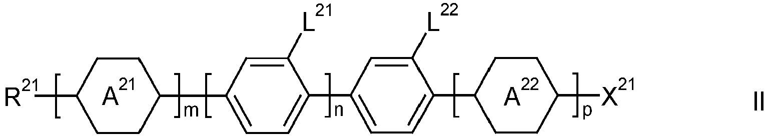 enthält, bei der
R²¹ eine der für R¹¹ in Formel I in Anspruch 3 gegebenen Bedeutungen besitzt,
X²¹ eine der für X¹¹ in Formel I in Anspruch 3 gegebenen Bedeutungen besitzt,
A²¹ eine der für A¹¹ in Formel I in Anspruch 3 gegebenen Bedeutungen besitzt,
A²² eine der für A¹² in Formel I in Anspruch 3 gegebenen Bedeutungen besitzt,
L²¹, L²² unabhängig voneinander H oder F sind,
m 0 oder 1 ist,
n 0, 1 oder 2 ist,
p 0 oder 1 ist und
m+n+p 1, 2 oder 3 ist.

5. Materialkombination nach einem oder mehreren der Ansprüche 1 bis 4, wobei die erste Flüssigkeit sich bei Raumtemperatur im isotropen Zustand befindet.

6. Materialkombination nach einem oder mehreren der Ansprüche 1 bis 5, **dadurch gekennzeichnet, dass** die erste Flüssigkeit eine dielektrische Konstante von 100 bis 1000 oder darüber, gemessen bei 20 °C und 1 kHz, aufweist.

7. Optische Komponente enthaltend einen Flüssigkeitsbehälter enthaltend
ein erstes Substrat,
ein zweites Substrat, das gegenüber dem ersten Substrat platziert ist, und
eine Materialkombination nach einem oder mehreren der Ansprüche 1 bis 6, die zwischen dem ersten Substrat und dem zweiten Substrat angeordnet ist.

8. Optische Komponente nach Anspruch 7, wobei die optische Komponente ineinander verzahnte Elektroden verwendet, die auf dem ersten Substrat platziert sind.

9. Optische Komponente nach Anspruch 7 oder 8, wobei die Elektroden von einer Polymerschicht bedeckt sind.

10. Optische Komponente nach Anspruch 9, wobei es sich bei der Polymerschicht um eine Flüssigkristall-Ausrichtungsschicht handelt.

11. Verfahren zur Herstellung einer optischen Komponente nach Anspruch 7, umfassend mindestens die Schritte A) Verteilen einer ersten Flüssigkeit nach einem oder mehreren der Ansprüche 1, 3 und 4 auf einem ersten Substrat, B) Verteilen einer zweiten Flüssigkeit nach Anspruch 1 oder 2 auf der ersten Flüssigkeit.

12. Optische Vorrichtung enthaltend eine optische Komponente nach einem oder mehreren der Ansprüche 7 bis 10.

13. In 2D- oder 3D-Modus betreibbare Anzeigevorrichtung, dynamisches Linsenelement, optischer Verschluss, Strahllenker, Beugungsgitter oder E-Paper(elektronisches Papier)-Anzeige enthaltend eine optische Vorrichtung nach Anspruch 12.

## Revendications

1. Combinaison de matériaux contenant :
un premier fluide, qui comprend un matériau cristallin liquide, et
un second fluide électriquement isolant sensiblement non miscible avec le premier fluide, qui comprend un ou plusieurs composé(s) organique(s) sensiblement fluoré(s) ou perfluoré(s),
lesquels fluides sont en contact l'un avec l'autre le long d'une frontière de phase.

2. Combinaison de matériaux selon la revendication 1, dans laquelle le second fluide est constitué par un ou plusieurs composé(s) organique(s) perfluoré(s).

3. Combinaison de matériaux selon la revendication 1 ou 2, **caractérisée en ce que** le premier fluide comprend un ou plusieurs composé(s) de la formule I : 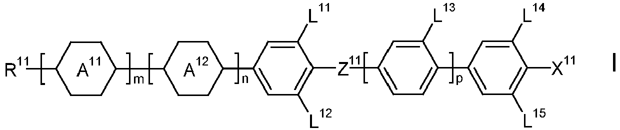 dans laquelle :
L¹¹ à L¹⁵ sont, de manière indépendante l'un de l'autre, H ou F,
R¹¹ est alkyle, lequel est en chaîne droite ou ramifié, est non substitué, mono- ou polysubstitué par F, Cl ou CN, et où un ou plusieurs groupe(s) CH₂ est/sont en option remplacé(s), dans chaque cas de manière indépendante les uns des autres, par -O-, -S-, -NR⁰¹-, -SiR⁰¹R⁰²-, -CO-, -C(O)O-, -OC(O)-, -OCO-O-, -S-CO-, -CO-S-, -CY⁰¹=CY⁰²- ou -C≡C- de telle sorte que des atomes de -O- et/ou de -S- ne soient pas liés directement les uns aux autres,
Y⁰¹, Y⁰² sont, de manière indépendante l'un de l'autre, F, Cl, ou CN, et à titre d'alternative, l'un d'entre eux peut être H,
R⁰¹, R⁰² sont, de manière indépendante l'un de l'autre, H, ou alkyle qui comporte de 1 à 12 atome(s) de C,
Z¹¹ représente -C(O)O- ou -CF₂O-,
X¹¹ représente halogène, CN, SF₅, un alkyle ou alcoxy mono- ou polyhalogéné qui comporte de 1 à 6 atome(s) de C ou un alkényle mono-, di- ou polyhalogéné qui comporte de 2 à 6 atomes de C, 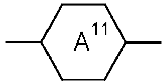 représente un groupe diradical qui est sélectionné parmi les groupes qui suivent :
a) le groupe qui est constitué par trans-1,4-cyclohexylène, 1,4-cyclohexénylène et 1,4'-bicyclohexylène, où, en outre, un ou plusieurs groupe(s) CH₂ non adjacents peut/peuvent être remplacé(s) par -0- et/ou par -S- et où, en outre, un ou plusieurs atome(s) de H peut/ peuvent être remplacé(s) par F,
b) le groupe qui est constitué par 1,4-phénylène et 1,3-phénylène, où, en outre, un ou deux groupe(s) CH peut/peuvent être remplacé(s) par N et où, en outre, un ou plusieurs atome(s) de H peut/peuvent être remplacé(s) par F, et 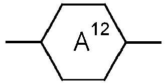 représente un groupe diradical qui est sélectionné parmi le groupe qui est constitué par 1,4-phénylène et 1,3-phénylène, où, en outre, un ou deux groupe(s) CH peut/peuvent être remplacé(s) par N et où, en outre, un ou plusieurs atome(s) de H peut/peuvent être remplacé(s) par F,
m est 0 ou 1,
n est 0, 1 ou 2,
p est 0 ou 1 et
m+n+p est 0, 1 ou 2.

4. Combinaison de matériaux selon une ou plusieurs des revendications 1 à 3, **caractérisée en ce que** le premier fluide comprend un ou plusieurs composé(s) de la formule II : 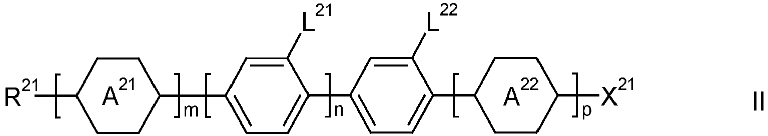 dans laquelle :
R²¹ présente l'une des significations qui ont été données pour R¹¹ dans la formule I selon la revendication 3,
X²¹ présente l'une des significations qui ont été données pour X¹¹ dans la formule I selon la revendication 3,
A²¹ présente l'une des significations qui ont été données pour A¹¹ dans la formule I selon la revendication 3,
A²² présente l'une des significations qui ont été données pour A¹² dans la formule I selon la revendication 3,
L²¹, L²² sont, de manière indépendante l'un de l'autre, H ou F,
m est 0 ou 1,
n est 0, 1 ou 2,
p est 0 ou 1 et
m+n+p est 1, 2 ou 3.

5. Combinaison de matériaux selon une ou plusieurs des revendications 1 à 4, le premier fluide étant dans l'état isotrope à température ambiante.

6. Combinaison de matériaux selon une ou plusieurs des revendications 1 à 5, **caractérisée en ce que** le premier fluide présente une constante diélectrique de 100 à 1000 ou au-delà, mesurée à 20 °C et 1 kHz.

7. Composant optique comprenant une enceinte de fluide qui comprend :
un premier substrat,
un second substrat qui est placé à l'opposé du premier substrat, et une combinaison de matériaux selon une ou plusieurs des revendications 1 à 6 qui est disposée entre le premier substrat et le second substrat.

8. Composant optique selon la revendication 7, dans lequel le composant optique utilise des électrodes imbriquées qui sont placées sur le premier substrat.

9. Composant optique selon la revendication 7 ou 8, dans lequel les électrodes sont recouvertes d'une couche en polymère.

10. Composant optique selon la revendication 9, dans lequel la couche en polymère est une couche d'orientation de cristaux liquides.

11. Procédé de fabrication d'un composant optique selon la revendication 7, comprenant au moins les étapes A) de délivrance d'un premier fluide selon une ou plusieurs des revendications 1, 3 et 4 sur un premier substrat, et B) de délivrance d'un second fluide selon la revendication 1 ou 2 sur le sommet du premier fluide.

12. Dispositif optique comprenant un composant optique selon une ou plusieurs des revendications 7 à 10.

13. Dispositif d'affichage pouvant être rendu opérationnel dans un mode 2D ou un mode 3D, élément de lentille dynamique, obturateur optique, moyen d'orientation de faisceau, réseau de diffraction, ou affichage à papier électronique comprenant un dispositif optique selon la revendication 12.
